# FASCICULE DE BREVET EUROPEEN

(11) **EP 3 113 650 B1**
(45) Date de publication et mention de la délivrance du brevet: **28.02.2018**
(21) Numéro de dépôt: 15714584.8
(22) Date de dépôt: 06.03.2015
(51) Int. Cl.: A47C 4/28, B62B 7/00, A47C 17/76, A47C 19/12, A47C 19/14

(54) **BI-STRUCTURE MAILLEE EXTENSIBLE, STRUCTURES MULTICOUCHES**
ERWEITERBARE VERMASCHTE BI-STRUKTUR, MEHRSCHICHTIGE STRUKTUREN
EXTENSIBLE MESHED BI-STRUCTURE, MULTILAYER STRUCTURES

(30) Priorité: 07.03.2014 FR 1451873
(43) Date de publication de la demande: 11.01.2017
(73) Titulaire: Herbault, Patrick, 92250 La Garenne Colombes (FR)
(72) Inventeur: Herbault, Patrick, 92250 La Garenne Colombes (FR)
(74) Mandataire: Cabinet Camus Lebkiri
(86) Numéro de dépôt international: PCT/FR2015/050560
(87) Numéro de publication internationale: WO 2015/132543

(56) Documents cités:
- EP-A2- 0 239 941
- WO-A1-2013/175146
- US-A- 317 922
- US-A- 779 622
- US-A- 3 483 070
- US-A- 4 717 283
- US-A1- 2001 054 198
- US-B1- 6 284 331

## Description

### DOMAINE

L'invention concerne le domaine des bi-structures maillées extensibles servant de structures portantes pliables ou extensibles permettant de supporter un poids. Le domaine de l'invention concerne, plus particulièrement, les structures portantes ayant une certaine rigidité et présentant un support confortable pour l'assise ou le dos d'une personne. L'invention concerne notamment les structures portantes pliables offrant un profil donné de pliage et permettant un support à même la structure pliable.

### ETAT DE L'ART

Dans le domaine des objets pliables en largeur, à titre d'exemple une poussette de type Mac Laren, il est classique d'intégrer des dispositifs souples qui se plient et se déplient en synchronisation avec le pliage/dépliage général de l'objet.

Il s'agit de solutions de type « toile tendue » entre deux armatures ou de type « hamac » ou filet suspendu entre quatre points d'accrochage à la structure pliante.

Dans le cadre d'une poussette, c'est souvent le cas du hamac qui accueille le bébé. C'est aussi le cas de filets positionnés en partie basse qui permettent de ranger des accessoires. Certaines structures pliantes intégrant un hamac sont répandues dans la grande distribution pour transporter les éléments tels que des aliments de courses dans des magasins. Ces structures pliantes permettent de ranger les achats effectués dans le filet ou le hamac.

Un pliage obtenu en largeur aboutit le plus souvent à une structure pliante plus compacte que les solutions sans pliage en largeur.

Cependant toutes ces solutions, lorsqu'elles offrent un pliage en largeur doivent respecter une capacité de pliage et dépliage et doivent comporter un dispositif si possible simple, telle que la croix intégrée à une structure pliante pour permettre à un filet ou un hamac de porter des éléments sans nuire à la structure pliante.

Dans le cas d'une poussette, la diminution en largeur est obtenue après avoir déverrouillé un double compas positionné à l'arrière de la poussette en poussant les bras arrière vers l'avant.

La réduction en largeur est obtenue au moment du pliage par la fermeture partielle d'un système en croix placé horizontalement.

Une contrainte généralement rencontrée de ces solutions est que :
- la structure pliante comportant un pliage en largeur est moins robuste qu'une solution sans pliage en largeur,
- l'usage de ces solutions est limité en raison des efforts s'exerçant sur la structure pliante ou sur la toile ou le hamac lorsque le poids est trop important.

Typiquement, un exemple est un pack de 6 bouteilles d'eau, ayant un poids d'environ 9 kg, qui sont difficilement portées sans déformation de la toile sous le siège d'une poussette.

D'autres applications de l'art antérieur peuvent être citées tel qu'un matelas à langer pliable ou un tapis de sol ou certaines assises de fauteuils. Ces dernières ne permettent pas de présenter un support confortable comportant à la fois une certaine rigidité et une capacité de pliage donnée. Un exemple de bi-structure maillée extensible est aussi connu du document US2001054198 A1.

### RESUME DE L'INVENTION

L'invention permet de résoudre les inconvénients précités.

Un objet de l'invention concerne une bi-structure maillée extensible qui comprend :
- une première structure maillée, les mailles étant réparties selon un premier plan, la première structure maillée étant pliable selon une première direction comprise dans le premier plan;
- une structure cadre comprenant aux moins deux éléments longitudinaux solidaires de la première structure maillée et agencés de part et d'autre des bords opposés de ladite première structure maillée et permettant de faire varier les dimensions de la bi-structure ;
- une seconde structure maillée, les mailles étant réparties selon un second plan parallèle au premier plan, la seconde structure maillée étant pliable selon la première direction ;
- des moyens de liaisons entre la première structure maillée et la seconde structure maillée de manière à rendre les deux structures maillées solidaires l'une de l'autre, les moyens de liaisons permettant de synchroniser les pliages des deux structures maillées dans la première direction,
la seconde structure maillée comprenant un nombre de mailles strictement supérieur au nombre de mailles de la première structure maillée, le rapport entre le nombre de mailles de la seconde structure maillée et le nombre de mailles de la première structure maillé étant sensiblement proche du rapport entre la largeur d'une lame de la première structure maillée et la largeur d'une lame de la seconde structure maillée. Avantageusement, les moyens de liaisons permettent de relier les première et seconde structures maillées par un ensemble de points de support.

Avantageusement, le pliage de la bi-structure est réalisé dans un espace limité à la forme géométrique dépliée de la première structure maillée.

Un avantage de l'invention est de permettre d'offrir un support rigide, pliable et donc compact dans une position pliée tout en intégrant une surface qui puisse être confortable. Un avantage de la présente invention réside donc dans la capacité de ce support à synchroniser les pliages de chaque couche maillée et de la structure cadre.

Avantageusement, les première et seconde structures maillées sont tissées de sorte que chaque maille de chacune des structures maillées est cousue avec ses mailles voisines.

Avantageusement, la bi-structure maillée extensible est pliable par compression latérale selon la première direction.

Avantageusement, les moyens de liaisons comprennent un ensemble de fibres fixées à chacune des première et seconde structures maillées.

La bi-structure comprenant deux structures maillées tissées et reliées par un réseau de fils ou de fibres est appelée bi-structure de type fibreuse.

Avantageusement, les fibres sont agencées selon une direction sensiblement perpendiculaire au premier plan.

Avantageusement, la structure de cadre comprend des ouvertures pour le passage d'éléments de compression s'étendant entre les deux bords opposés de la structure de cadre.

Avantageusement, les éléments de compression sont des fils parallèles entre eux qui permettent de rapprocher les deux bords opposés de la structure de cadre par une action de traction sur lesdits fils.

Un avantage de la bi-structure maillée extensible de type fibreuse est de permettre d'offrir une surface privilégiant un confort par exemple d'assise tout en étant compatible d'une exigence de compacité pour le transport de la bi-structure seule ou lorsqu'elle est intégrée à un dispositif pour une application particulière. Elle est compatible d'une cinématique propre à un tel dispositif tel qu'une poussette, un chariot, un fauteuil roulant ou un matelas.

Avantageusement, la première et/ou la seconde structures maillées comporte(nt) un ensemble de barres ou de lames reliées entre elles par une pluralité de points d'assemblage de sorte à former un ensemble de mailles.

Avantageusement, les points d'assemblage forment une liaison pivot entre deux barres du maillage.

Avantageusement, les points d'assemblage permettent d'établir un contact plan localement entre deux portions de barres entre elles ou de lames entre elles.

Avantageusement, au moins une structure maillée est sous forme d'une structure alvéolaire ayant une capacité d'extension en largeur.

La bi-structure comprenant au moins une structure maillée comportant des lames ou des barres formant une structure alvéolaire est appelée structure maillée extensible de type alvéolaire. Selon l'invention, la seconde structure maillée comprend un nombre de mailles strictement supérieur au nombre de mailles de la première structure maillée, le rapport entre le nombre de mailles de la seconde structure maillée et le nombre de mailles de la première structure maillé étant sensiblement proche du rapport entre la largeur d'une lame de la première structure maillée et la largeur d'une lame de la seconde structure maillée.

Avantageusement, le rapport entre le nombre de mailles de la seconde structure maillée et le nombre de mailles de la première structure maillé est pair ou un multiple de 4.

Un avantage d'une telle structure maillée extensible ou bi-structure maillée extensible de type alvéolaire est qu'elle offre une certaine rigidité permettant d'être utilisée comme support permettant de supporter un poids important.

Avantageusement, la structure de cadre comprend aux moins deux éléments longitudinaux solidaires de la seconde structure maillée et agencés de part et d'autre des bords opposés de ladite seconde structure maillée et permettant de faire varier les dimensions de la bi-structure.

Avantageusement, la structure de cadre comporte au moins une barre de liaison formant un des éléments longitudinal.

Avantageusement, au moins une barre de liaison est une barre coulissante.

Avantageusement, au moins une barre de liaison comporte au moins deux éléments de liaisons permettant d'assurer chacun au moins un point de support avec la structure maillée, la barre de liaison s'étendant selon la longueur de la bi-structure.

Avantageusement, au moins un élément de liaison forme une liaison glissière avec la barre de liaison à laquelle il est lié.

Avantageusement, la bi-structure maillée extensible comprend :
- une première structure maillée de type alvéolaire comprenant une pluralité de lames fixées entre elles de sorte à former un ensemble de mailles ;
- une seconde structure maillée comprenant une bi-structure maillée extensible de type fibreuse de l'invention.

Un avantage d'une telle combinaison de couches est d'offrir un support comportant à la fois une certaine rigidité et une surface confortable. La synchronisation des pliages peut être assurée par des structures cadres et/ou des moyens de liaisons.

Avantageusement, la bi-structure maillée extensible pliable comprend :
- une première structure maillée comprenant une bi-structure de type alvéolaire de l'invention ;
- une seconde structure maillée comprenant une bi-structure de type fibreuse de l'invention.

Un avantage de cette combinaison de couches est d'augmenter la rigidité de la bi-structure maillée extensible et d'offrir une surface d'appui plus importante.

Avantageusement, la bi-structure maillée extensible comprend 3 couches superposées dont :
- une première couche formant une bi-structure maillée extensible de type fibreuse de l'invention ;
- une couche intermédiaire;
- une seconde couche formant une bi-structure maillée extensible de type fibreuse de l'invention.

Un avantage de cette combinaison est d'offrir un support réversible confortable de chaque côté qui soit pliable tout en ayant une certaine rigidité pour servir de surface d'appui ou de support.

Avantageusement, la couche intermédiaire est une structure maillée comprenant une pluralité de lames fixées entre elles de sorte à former un ensemble de mailles.

Avantageusement, une structure de maintien permet au moins un verrouillage de la bi-structure dans la position de dépliage.

Avantageusement, la structure de maintien comprend un système central de pliage en forme de « X » ou en forme de « H ».

Avantageusement, la structure de maintien comprend une structure de renfort transversale amovible dans sa longueur permettant d'assurer en position de dépliage un ensemble de points de support transversaux.

Avantageusement, la structure de renfort transversale (22) comprend au moins un ensemble de barres coulissantes ou une barre télescopique.

Avantageusement, la structure de renfort transversale comprend au moins un compas pliant, le pliage du compas étant synchronisé avec le pliage de la bi-structure.

Avantageusement, la structure de cadre comporte au moins deux barres de liaison parallèles entre elles et formant la longueur de la bi-structure, chacune des barres de liaison étant fixée de part et d'autre d'au moins une structure maillée extensible par au moins deux éléments de liaison, dont au moins un élément de liaison est solidaire de la barre de liaison auquel il est lié.

### BREVES DESCRIPTION DES FIGURES

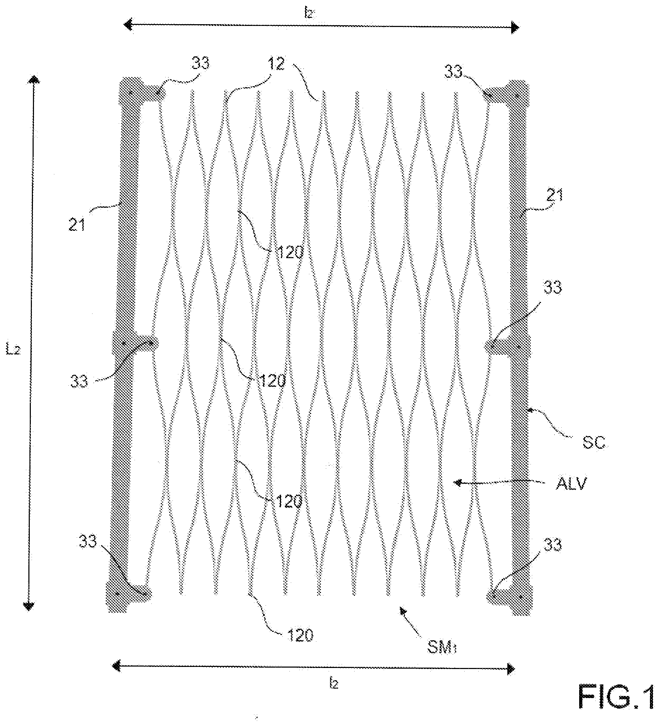

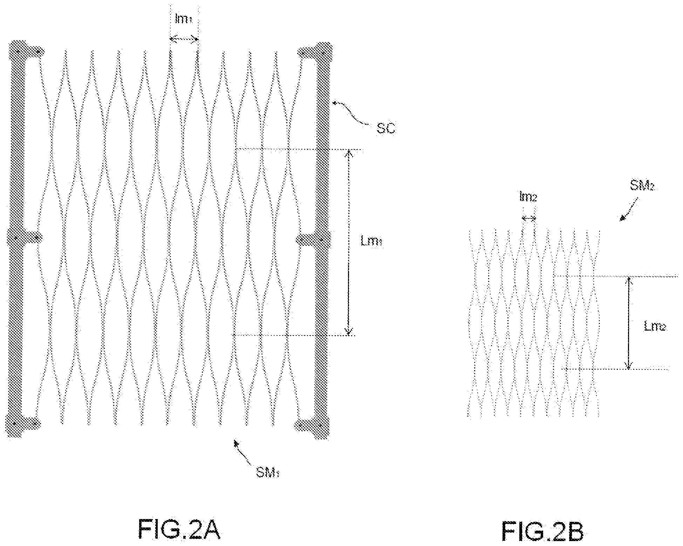

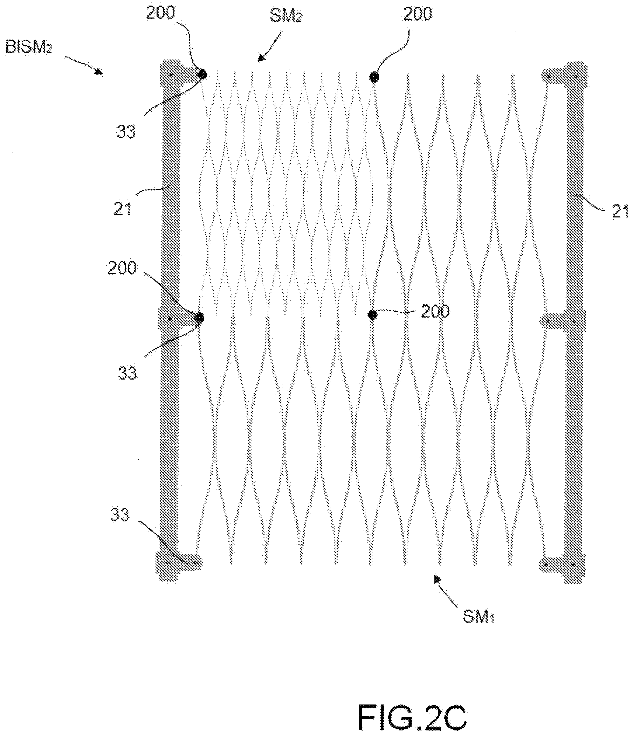

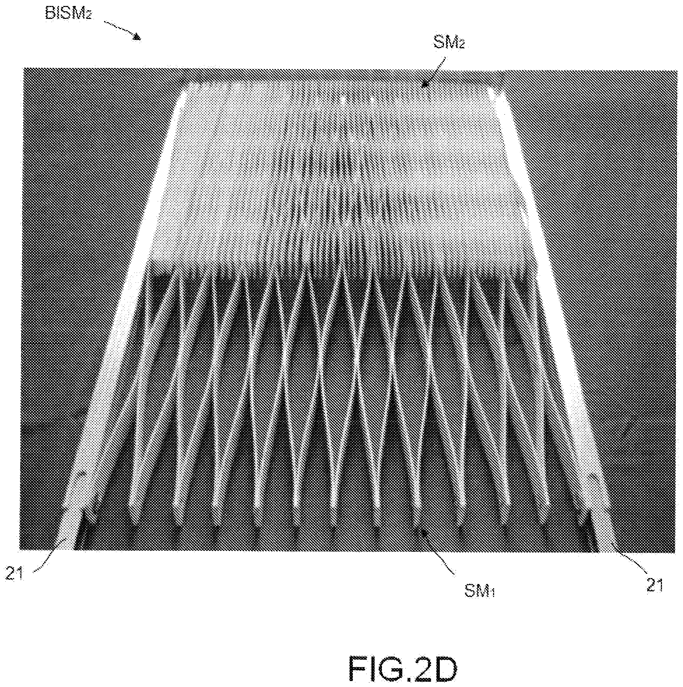

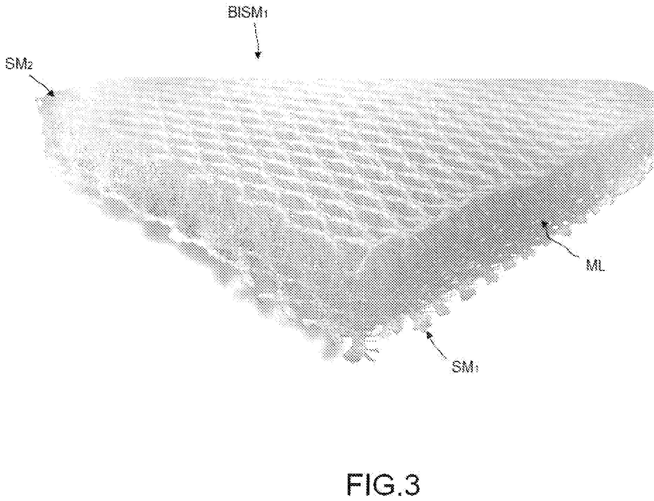

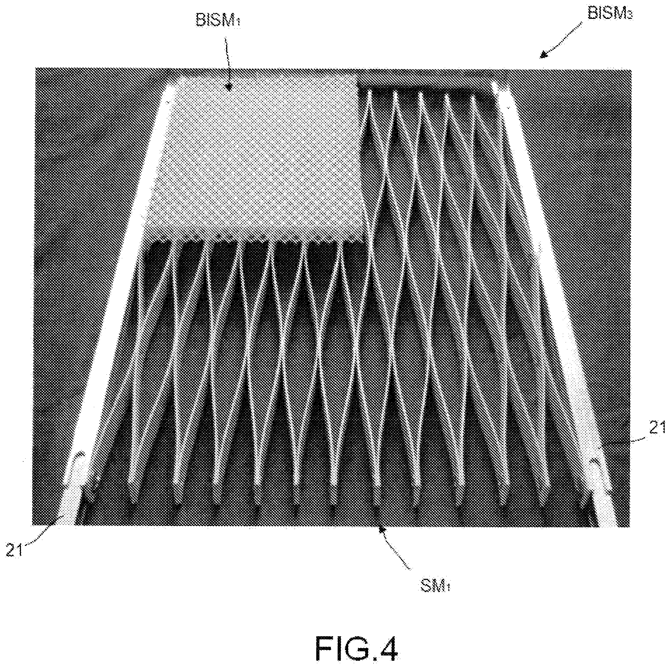

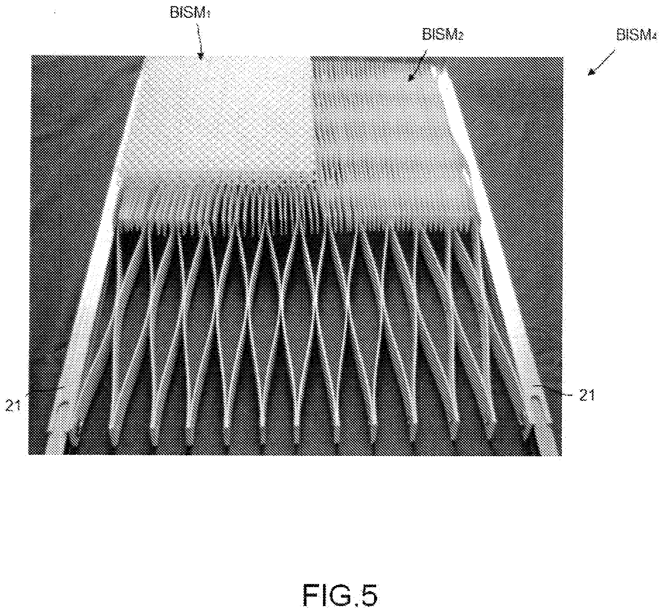

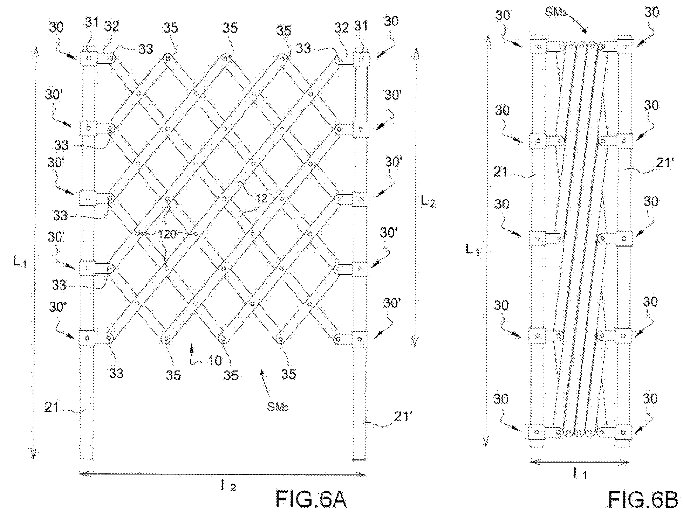

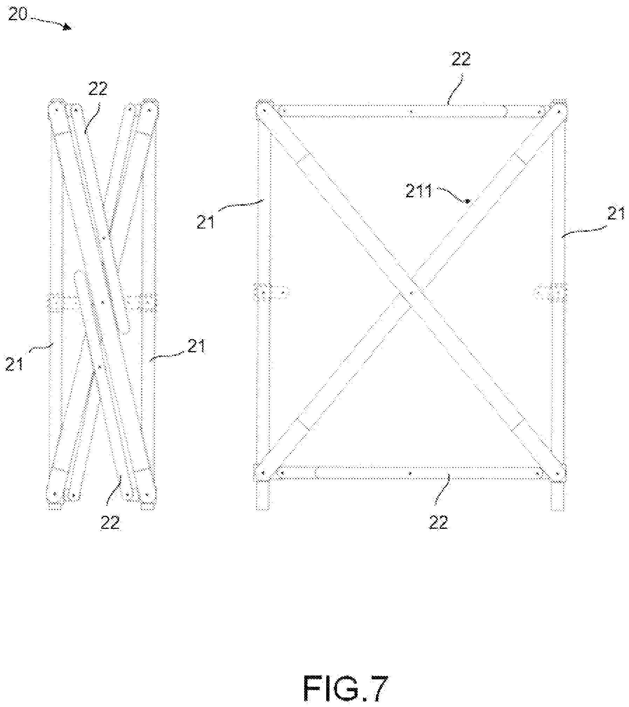

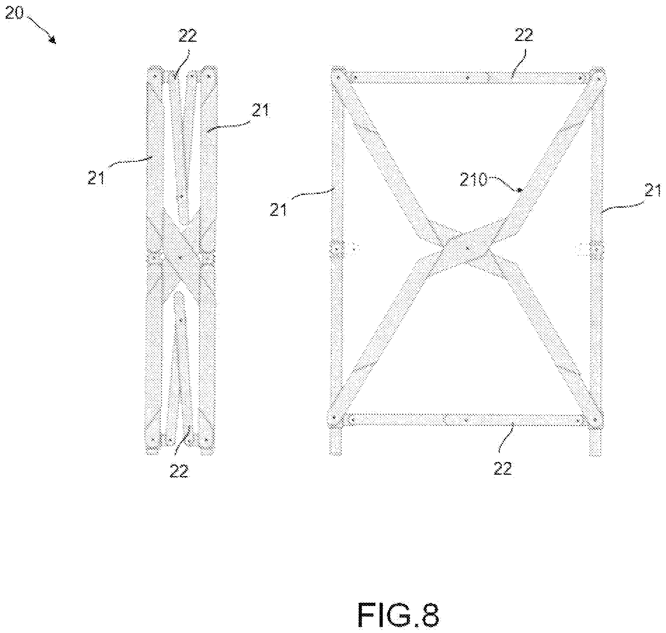

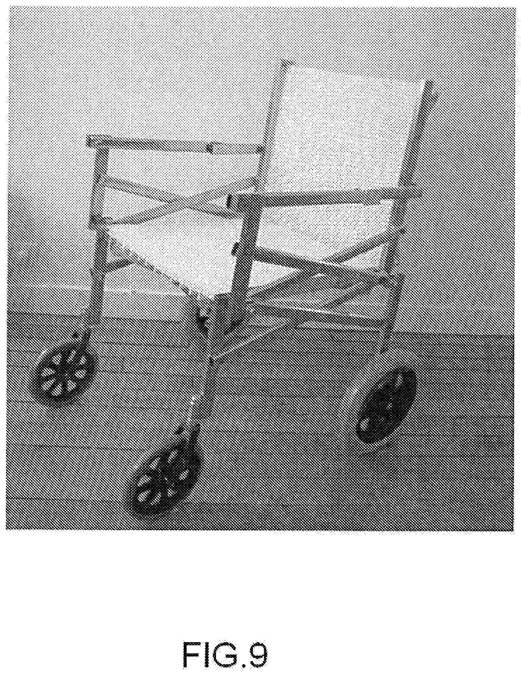

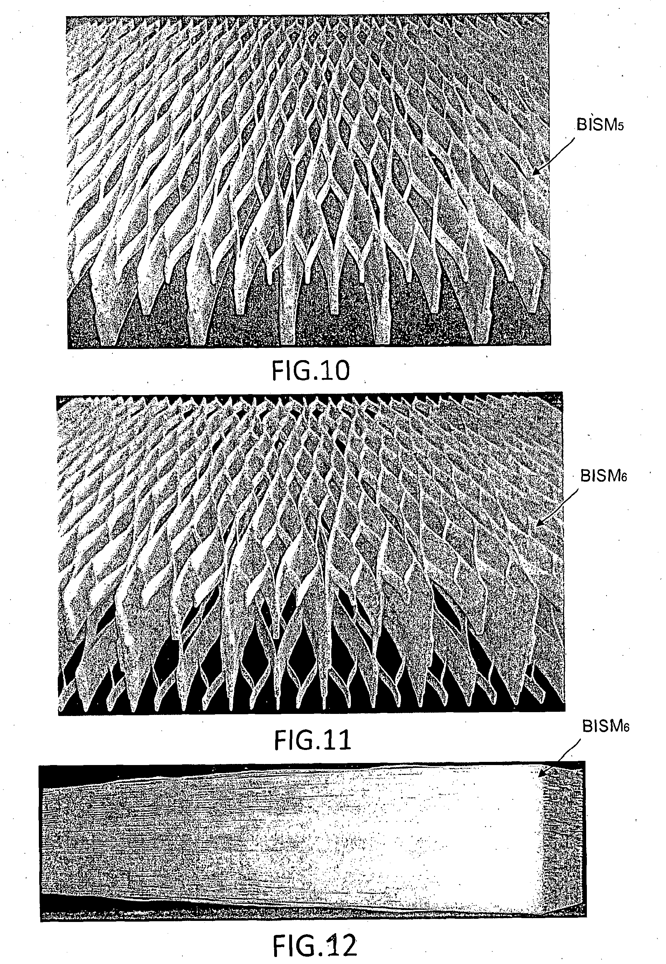

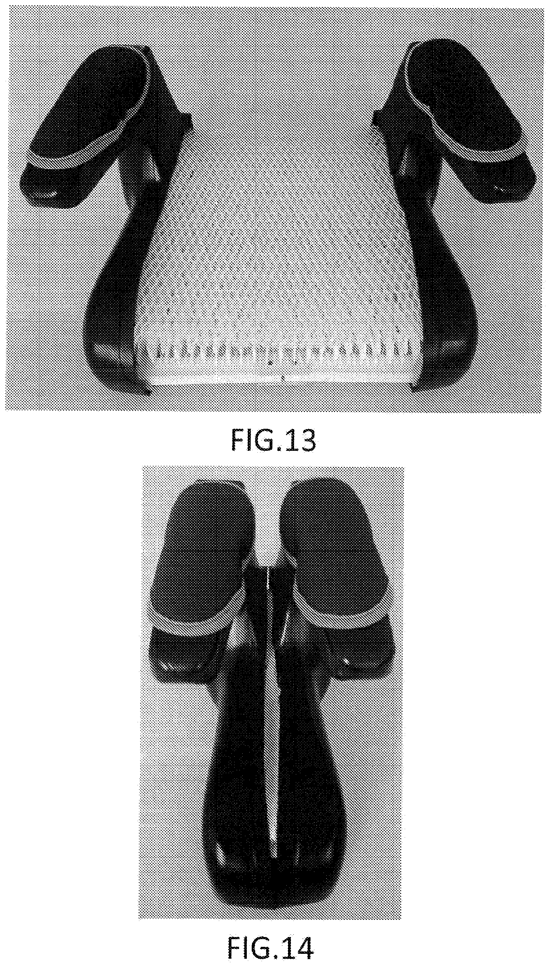

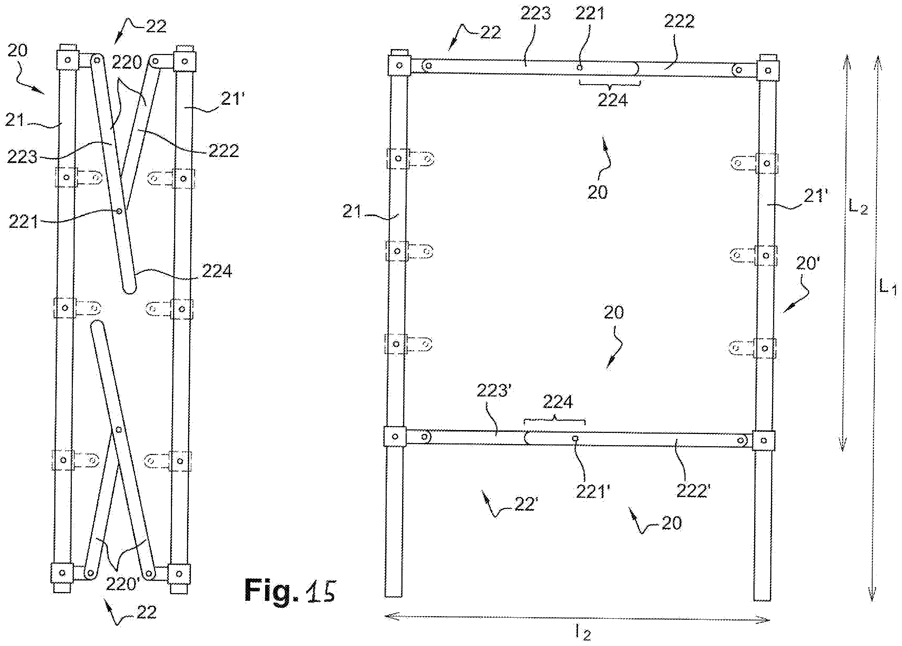

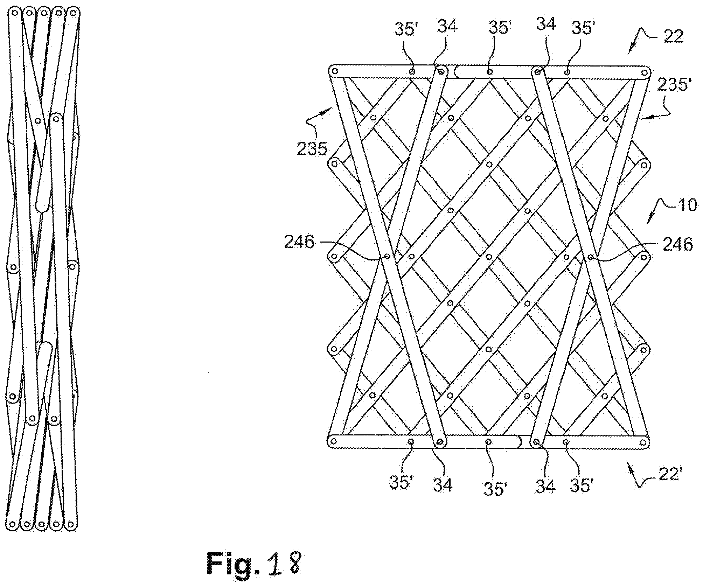

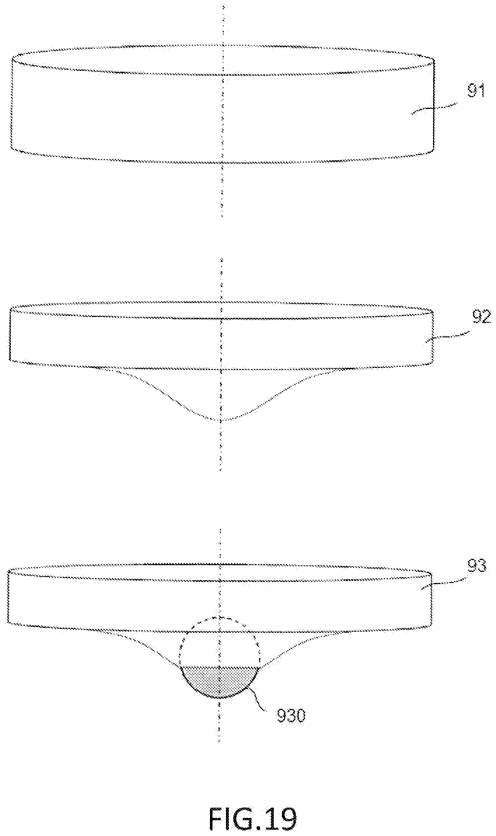

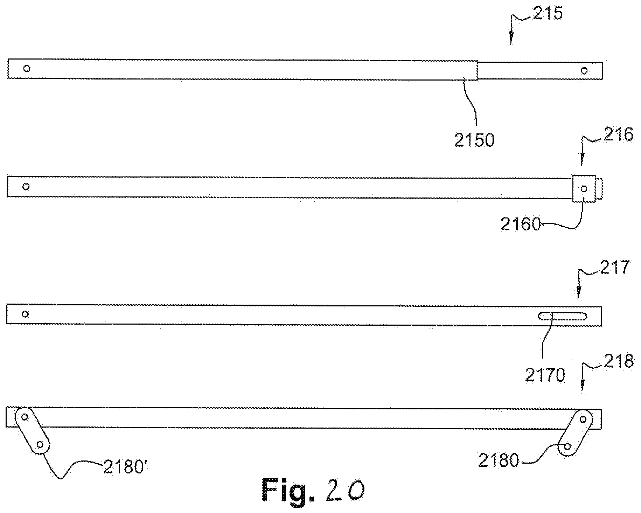

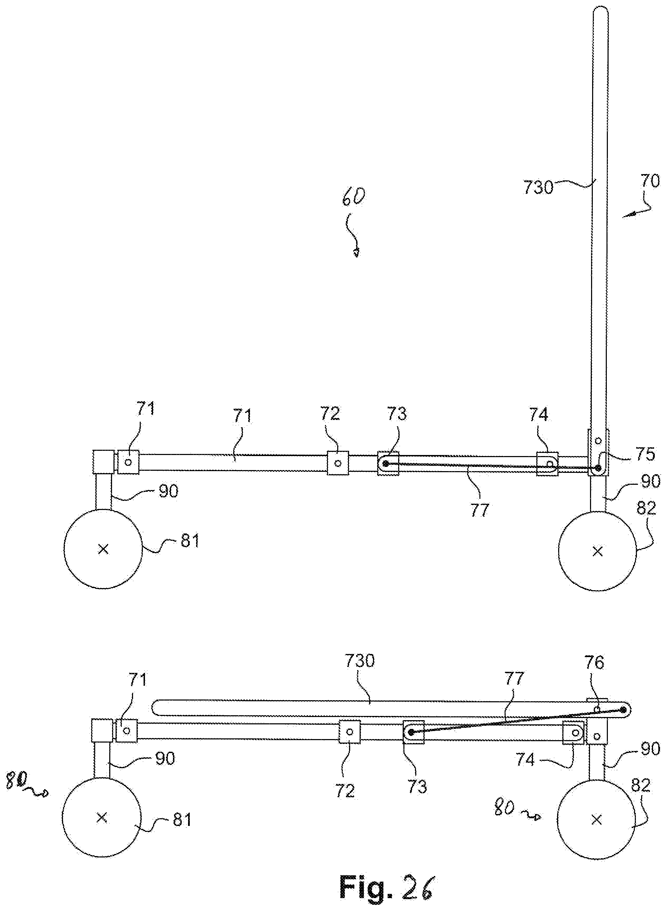

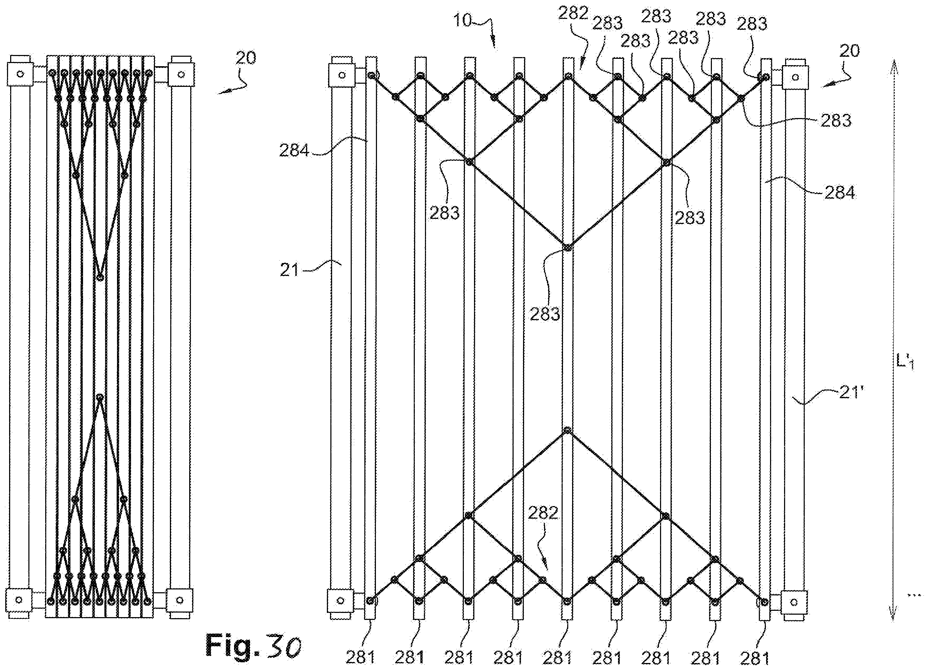

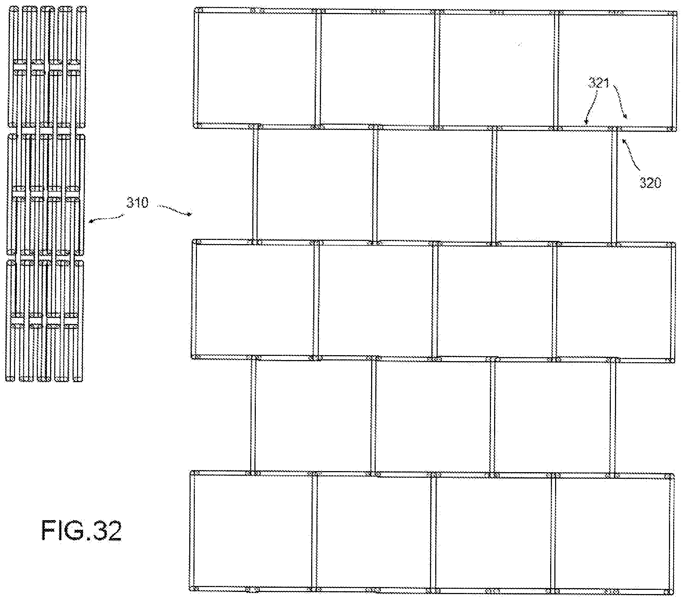

D'autres caractéristiques et avantages de l'invention ressortiront à la lecture de la description détaillée qui suit, en référence aux figures annexées, qui illustrent :
▪ figure 1 : une structure extensible de l'invention comprenant des lames formant des alvéoles;
▪ figures 2A, 2B : deux structures extensibles de l'invention comprenant chacune des lames de différentes dimensions formant des alvéoles;
▪ figures 2C, 2D : une bi-structure de l'invention comprenant deux structures extensibles dont l'une d'elles est partiellement représentée ;
▪ figure 3 : une bi-structure de l'invention comprenant deux structures maillées souples liées entre elles par un réseau de fibres souples ;
▪ figure 4 : une bi-structure de l'invention comprenant une bi-structure selon le mode représenté à la figure 3 et une structure maillée alvéolaire ;
▪ figure 5 : une bi-structure de l'invention comprenant une bi-structure selon le mode représenté à la figure 3 et une bi-structure selon le mode représenté à la figure 2D ;
▪ figures 6A, 6B : une structure maillée pouvant être combinée au structure maillée des modes des figures 2A, 2B ou 3 de l'invention ;
▪ figure 7 : un premier exemple de structure de maintien pliable permettant de renforcer le maintien de la bi-structure ;
▪ figure 8 : un second exemple de structure de maintien pliable permettant de renforcer le maintien de la bi-structure ;
▪ figure 9: un fauteuil roulant intégrant une bi-structure de l'invention par exemple dans son assise et son dossier ;
▪ figure 10 : un exemple de bi-structure extensible en position dépliée de l'invention comprenant trois structures maillées superposées, ladite bi-structure étant réalisée à partir d'une impression 3D ;
▪ figure 11 : un exemple de bi-structure en position dépliée de l'invention comprenant cinq structures maillées superposées et réalisé à partir d'une impression 3D ;
▪ figure 12 : un exemple de bi-structure en position pliée de l'invention comprenant cinq structures maillées superposées et réalisé à partir d'une impression 3D ;
▪ figures 13 et 14 : un exemple d'un rehausseur comprenant une bi-structure maillée extensible de l'invention ;
▪ figures 18, 30 : différentes positions de pliages de différentes structures maillées de la bi-structure de l'invention ;
▪ figure 19 : des exemples d'interfaces permettant de former des points de support entre la structure maillée et la structure de maintien ou la structure cadre de l'invention ;
▪ figure 20 : différentes barres de liaisons comportant un élément permettant de former une liaison glissière ;
▪ figures 15 à 17, 21 à 25 et 27 à 29: différentes positions de pliages de différentes structures de maintien ou de structures cadre ou de structures de renfort de la bi-structure de l'invention;
▪ figure 26 : différentes positions de pliages en vue de coupe d'un chariot comprenant une bi-structure de l'invention ;
▪ figures 30 à 32 : une structure cadre de type auxétique se combinant avec une bi-structure maillée extensible.

### DESCRIPTION

On entend par « bi-structure extensible» une bi-structure comprenant deux couches liées entre elles et dont les mouvements de pliage sont synchronisé.

Lorsque la bi-structure est rectangulaire, elle s'inscrit dans une forme rectangulaire ou encore dont l'allure moyenne du périmètre forme un rectangle. La bi-structure rectangulaire peut évoluer lors du pliage selon différentes formes de rectangles dont la largeur et/ou la longueur peuvent varier. La bi-structure rectangulaire comprend les points quatre coins d'un rectangle.

Une bi-structure peut être de forme trapézoïdale ou toute autre forme compris dans un plan.

On désigne indifféremment une « structure de maillage » ou une « structure maillée » dans la suite de la description.

La figure 1 représente une structure maillée, notée SM₁. Selon les modes de réalisation, la structure maillée SM₁ peut avoir une forme de quadrilatère telle qu'une forme rectangulaire ou une forme carrée ou encore trapézoïdale.

La forme trapézoïdale peut être définie avec les deux côtés 21 identiques avec l'avant l₂' et l'arrière l₂ différents ou encore avec l'avant l₂' et l'arrière l₂ identiques mais les deux côtés 21 différents.

La structure maillée SM₁ est une couche d'une bi-structure de l'invention qui pourrait alors être utilisée pour former le fond d'un chariot de supermarché dont le fond et les parois sont trapézoïdales et pliables. Cela pourrait être également une version pliable d'une chaise dont le dossier et/ou l'assise seraient de forme trapézoïdale.

La structure alvéolaire SM₁ est une structure du type celle décrite dans la demande de brevet française N°1355292 déposée le 7 Juin 2013 au nom de Patrick Herbault notamment à la figure 21. Le contenu de la demande est incorporé par références dans la présente description.

Le maillage de la structure maillée SM₁ se présente sous forme de l'association de lames souples 12 (seules quelques références 12 ont été référencées sur la figure 1 pour conserver une lisibilité de la figure). Les lames souples 12 sont reliées entre elles en des points de d'assemblage 120 (Seulement quelques points ont été référencés sur la figure pour conserver une lisibilité de la figure 1).

Dans une position dépliée, la structure maillée extensible SM₁ forme des alvéoles ALV dont une est référencée sur la figure 1. En position pliée, la structure maillée extensible SM₁ se replie et les lames souples sont sensiblement parallèles entre elles. La capacité de pliage d'une telle structure maillée extensible est très importante car la largeur minimale de la structure maillée extensible SM₁ dépend du nombre de lames 12, de leur épaisseur et de l'encombrement des point d'assemblage 120. Lorsque ces derniers sont optimisés en encombrement et que les lames ne font que quelques millimètres de largeur, la structure maillée extensible SM₁ peut être fortement compressée et peu encombrante en position pliée.

En outre, l'agencement et le nombre de lames 12 peut être configurés pour permettre de définir une surface de support maillée rigide pouvant supporter un certain poids, par exemple le poids d'un être humain.

A titre d'exemple de réalisation, une vingtaine de lames souples de 2 mm d'épaisseur peuvent être utilisées. Une longueur de lames d'environ 60 centimètres peut être définie. Les lames peuvent être reliées les unes aux autres alternativement de chaque côté tous les 15 centimètres par des rivets pop.

La définition de la taille des lames est un compromis entre différentes exigences selon l'usage souhaité de la bi-structure maillée extensible BISM₂ de l'invention par exemple reposant sur une structure maillée extensible SM₁ représentée à la figure 1. La structure maillée extensible SM₁ de la figure 1 représente l'une des deux couches de la bi-structure BISM₂ lorsque cette dernière comporte deux couches.

Notamment, le choix des lames et de leur propriétés reposent sur :
▪ la largeur en position fermée souhaité de la bi-structure, par exemple 20 lames de 2mm de large pour être inférieur à 50 mm ;
▪ la flexibilité souhaitée de la lame soumise à une force d'extension/compression ;
▪ l'épaisseur et la hauteur souhaitées de la lame pour réaliser la fonction de support.

Cette structure alvéolaire extensible formant un exemple de structure maillée peut également être réalisée sous forme de structure en nid d'abeille. Elle peut être également réalisée industriellement sous forme de plastique souple injecté ou sous forme de feuilles de plastique par exemple en polyamide ou polypropylène soudées les unes aux autres. Dans ce dernier cas, le ratio d'extension peut atteindre un ratio de 1 à 16.

Ce mode de réalisation apporte un bon rendement puisque que l'écart de longueur L₂ de la bi-structure représente tout au plus un centimètre.

Si cette structure maillée extensible est fixée par les points centraux, les extrémités ne vont se déplacer que de quelques millimètres. Des solutions de type « poignées de valises » permettent de fixer des extrémités aux quatre coins de la bi-structure.

D'autre part, un doigt d'enfant ou même d'adulte ne serait en danger s'il restait présent au moment de la fermeture. Cette solution comporte un avantage du point de vue de la sécurité assurée par le maillage de la structure maillée SM₁.

La combinaison d'une telle structure maillée SM₁ avec une structure de maintien par exemple illustrée à la figure 7 ou la figure 8 est également décrite dans la demande de brevet française N°1355292 déposée le 7 Juin 2013 au nom de Patrick Herbault. Le contenu de la demande et notamment cette combinaison est incorporée par références dans la présente description.

La bi-structure maillée extensible de l'invention est dans tous les modes de l'invention combinée avec une structure de cadre SC qui comporte au moins deux éléments longitudinaux 21.

Dans le cas de la figure 1, 2A, 2B, la structure de cadre SC peut être fixée à une unique structure maillée extensible SM₁ ou SM₂ ou bien les deux.

La structure maillée SM₁ est rendue solidaire de cette structure de cadre SC par des points de support 33 permettant de lier les mouvements de la structure maillée SM₁ avec la structure de cadre SC. En particulier, la structure de cadre SC peut être entendue comme des moyens pour faire varier les dimensions de la structure maillée SM₁ notamment en réduisant la largeur l₂ de la structure maillée SM1.

La structure de cadre SC est également décrite dans la demande de brevet française N°1355292 déposée le 7 Juin 2013 au nom de Patrick Herbault. Le contenu de la demande et notamment les différentes variantes de structure de cadre noté 20' dans cette demande antérieure sont incorporées par références dans la présente description.
La structure de cadre assure notamment la fonction d'extension de la bi-structure. Ce cadre peut être réalisé dans un matériau flexible et élastique, type fibre de verre, fibre de carbone pour assurer la tension de l'ensemble en utilisation nominale.

La figure 2A et 2B illustrent deux structures maillées SM₁ et SM₂ dont la première structure maillée SM₁ est combinée avec une structure de cadre SC et la seconde structure maillée SM₂ ne l'est pas.

Dans ce mode de réalisation, la bi-structure de l'invention repose sur la combinaison sous forme de superposition de deux structures maillées SM₁ et SM₂ telles que représentées aux figures 2C et 2D.

Différentes variantes de réalisation peuvent être envisagées selon le type de maillage des deux structures maillées extensibles SM₁, SM₂ et du rapport des dimensions de mailles entre elles. A titre d'exemple, la structure maillée de la seconde structure SM₂ peut être plus fine que celle de la première structure maillée SM₁.

Les deux structures maillées SM₁ et SM₂ peuvent être reliées en elles par un certain nombre de points communs 200 conservés pendant le pliage et le dépliage de la bi-structure maillée extensible BISM₂. Les points communs 200 sont nommés des points de synchronisation 200. Les points de synchronisation 200 forment également des points de support dans la mesure où une structure maillée extensible SM₁ en position horizontale supporte une seconde structure maillée extensible SM₂ solidaire et superposée à ladite première structure maillée extensible SM₁. La bi-structure BISM₂ de l'invention permet donc de synchroniser les pliages des deux couches maillées extensible SM₁ et SM₂.

Un exemple est de définir un rapport de 2 en longueurs Lm_{1/}Lm₂ et en largeur lm₁/ lm₂ des mailles, ce qui donne un rapport de quatre en considérant la surface des mailles.
Pour passer à partir d'une structure maillée SM₁ à une structure maillée SM₂, chaque lame 12 est dédoublée dans une partie supérieure de sa hauteur en deux lames d'épaisseur moitié qui vont réaliser des mailles quatre fois plus petites. Pour combiner et synchroniser le pliage de deux structures maillées SM₁ et SM₂ liées entre elle pour former une bi-structure, par exemple, si SM₁ comprend 20 lames de 2mm de large, alors SM₂ doit comprendre 40 lames d'1 mm de large.

Afin de mieux représenter la superposition, une partie uniquement de la seconde structure maillée extensible SM₂ est représentée sur la figure 2C, notamment un quart de la seconde structure maillée.

Sur la figure 2D, seulement une moitié de la seconde structure maillée extensible SM₂ a été représentée en superposition de la première structure maillée SM₁.

La bi-structure BISM₂ de l'invention comprend avantageusement deux structures maillées SM₁ et SM₂ occupant la même surface en position dépliée ou en position pliée.

Selon le mode de réalisation envisagé, la bi-structure de l'invention peut comprendre une pluralité de couches formant chacune une structure maillée extensible avec une taille de maille donnée. De proche en proche, la pluralité de couches maillées peut comprendre des mailles de surface de plus en plus petites selon leur superposition et le nombre de couches superposées. Par exemple, une première couche maillée comprend des mailles d'une certaine dimension en surface, une seconde couche juxtaposée et superposée à la première couche comprend des mailles dont la surface correspond au quart de la surface des mailles de la première couche. Une troisième couche juxtaposée et superposée à la seconde couche comprend des mailles dont la surface est divisée par 16 en surface par rapport à la surface d'une maille de la première couche. Une quatrième couche peut ainsi également être juxtaposée et superposée à la troisième couche dont les mailles ont une surface divisée par 64 de la surface des mailles de la première couche.

Une structure maillée SM₁ peut être réalisée par assemblage de lames, chaque lame étant fixée les unes aux autres par des points d'assemblage 120 formant un contact entre deux lames adjacentes. La découpe des lames peut être réalisée par un découpage laser ou l'utilisation d'imprimante 3D en fonction du matériau retenu et la finesse nécessaire.

Pour conserver une largeur identique des deux structures maillées extensibles SM₁ et SM₂ formant la bi-structure BISM₂, la largeur des lames de chaque structure maillée extensible SM₁, SM₂ peut être adaptée selon les cas. Dans le cas où la structure maillée extensible SM₂ comporte le double du nombre de lames de la structure maillée extensible SM₁, l'épaisseur des lames de la structure maillée extensible SM₂ est deux fois plus fine que l'épaisseur des lames de la structure maillée extensible de la première structure maillée extensible SM₁.

Il est possible également au lieu de dédoubler une lame : de réunir deux lames d'épaisseur moitié et de les associer sur une partie de la hauteur par exemple en utilisant une technique de lamellé-collé.

La bi-structure maillée extensible BISM₂ de l'invention comportant deux structures maillées extensibles SM₁ et SM₂ formant deux couches solidaires permet lorsque les mailles sont de différentes dimensions d'obtenir :
- une première couche comportant une certaine rigidité offrant une surface portante définissant un support adapté à l'usage et ;
- une seconde couche comportant un maillage plus fin permettant d'offrir un confort supplémentaire par exemple lorsque la bi-structure est utilisée comme une assise d'un fauteuil ou une encore comme un matelas à langer.

Préférentiellement, la structure maillée SM₁ comportant les lames de plus grande épaisseur, et offrant donc la plus grande rigidité de la bi-structure, est fixée à la structure de cadre SC qui permet de faire varier les dimensions de la bi-structure. Lors d'un pliage ou d'un dépliage engagé au moyen de la structure de cadre SC, la première structure maillée SM₁ se plie ou se déplie entrainant le pliage de la seconde structure maillée SM₂ qui est liée par les points de synchronisation 200 à la première structure maillée SM₁.

Selon un second mode de réalisation de l'invention, la bi-structure maillée BISM₁ comporte deux structures maillées SM₁ et SM₂ sont des couches tissées de sorte à former un ensemble de mailles juxtaposées les unes aux autres dans un plan. Chaque maille d'une structure maillée extensible SM₁ ou SM₂ sont cousues avec ses mailles voisines.

Les deux couches tissées comprenant chacune un ensemble de mailles sont dans ce mode de réalisation assemblées entre elles par un réseau de fibres ou de fils ML par exemple en nylon, de sorte à rendre solidaire les couches maillées SM₁ et SM₂.

La figure 3 représente un exemple d'un tel assemblage de couches maillées qui peut être par exemple un produit du type 3D Spacer dont différentes demandes de brevets décrivent des méthodes de fabrication d'un tel assemblage, par exemple la demande WO2006015461 (A1).

Cet assemblage comprend deux couches maillées parallèles entre elles maintenues à distance de l'ordre de 1,5 cm dans un mode de réalisation.

Une particularité de la présente invention est de combiner un assemblage de couches maillées à une structure cadre de manière à définir une bi-structure maillée extensible BISM₁ qui permet d'obtenir différentes positions de pliage par compression latérale de l'assemblage.

Cet assemblage de couches maillées peut être mise en extension/ compression latérale grâce à une structure cadre SC. De fait, elle peut être anisotrope, et dans le cadre de l'invention, il faut privilégier l'orientation des mailles de façon à privilégier le sens le plus favorable à l'élasticité attendue.

En effet, la bi-structure maillée extensible BISM₁ de l'invention permet, grâce à la structure cadre SC, de plier la bi-structure par compression latérale uniformément sur toute la longueur de la bi-structure.

La première et la seconde structure maillée SM₁ et SM₂ peuvent être choisies ou conçues de sorte à obtenir une anisotropie de l'assemblage des mailles dans un plan de la bi-structure maillée extensible BISM₁.

A cet effet, les mailles peuvent être cousues et orientées de sorte à offrir une compression facilitée selon un premier sens et une résistance à la compression selon un second sens, le premier et le second sens étant compris dans le plan de la bi-structure BISM₁. Le premier et le second sens peuvent être par exemple perpendiculaires entre eux.

Selon un mode de réalisation, il est possible d'optimiser le caractère anisotrope de cette assemblage de couches maillées SM₁ et SM₂ en réalisant sur mesure des mailles allongées dans un sens privilégié dans un rapport, à titre d'exemple, de 1 à 6 au lieu d'une maille standard dont la longueur est sensiblement égale à sa largeur. Les structures maillées SM₁ et SM2 ont sensiblement la même répartition de maille et la même forme de maille. Lorsque les mailles sont conçues allongées avec une largeur plus petite que la longueur, le pliage par compression permet d'obtenir des taux de réduction par pliage important.

La structure cadre SC comprend, selon un mode de réalisation, deux élément longitudinaux 21 s'étendant de part et d'autre des couches maillées SM₁ et SM₂ superposées de sorte à engager le pliage sur toute la longueur.

Selon une variante de réalisation, les deux éléments longitudinaux comprennent une pluralité d'ouvertures pour le passage d'une pluralité de fils de compression traversant dans le plan de la bi-structure le réseau de fibres ou de fils. Les fils de compression permettent de lier les deux éléments longitudinaux de telle sorte qu'une action en traction ou un relâchement permet de faire se rapprocher les deux éléments longitudinaux. Par cette action la bi-structure se déplie ou se plie par compression des couches de tissus. Les mailles de chaque couche de tissus se resserrent ou se détendent de sorte à offrir une variation totale de largeur permettant un pliage de la bi-structure BISM₁.

Selon un mode de réalisation, la fixation des fils sur un côté d'un élément longitudinal peut être réalisée par un simple noeud du fil de l'autre côté de l'ouverture de l'élément longitudinal. Le fil coulisse par l'ouverture et entraine par exemple la compression latérale des deux couches maillées extensibles reliées par un réseau de fibres.

Dans ce cas, les fils peuvent être réunis par un élément regroupant tous les fils traversant le réseau de fibres ou de fils permettant de tirer l'ensemble en comprimant la bi-structure maillée extensible de l'invention. Le degré de compression peut être réglé selon la longueur de fil « tirée ». En outre l'élément regroupant tous les fils peut comprendre selon un exemple de réalisation des moyens pour obtenir différentes positions de compression et donc de pliage selon comment le fil est tendu.

Avantageusement, une solution pour bloquer les fils de façon regroupée permet de synchroniser sur toute la longueur des éléments longitudinaux le pliage de la bi-structure. Le pliage est ainsi uniformément appliqué sur toute la longueur d'un élément longitudinal 21.

Un élément longitudinal 21 peut être, par exemple, un profilé creux qui permet de bloquer et de ranger les fils regroupés.

Le nombre de fils et le dispositif permettant de les regrouper de manière à mutualiser une action sur chaque fil conjointement aux autres fils peuvent être adaptés à chaque cas selon l'utilisation de la bi-structure maillée extensible BISM₁.

Un dispositif permettant de regrouper les fils ensemble peut contrainte à développer une plus grande force pour ramener chaque élément longitudinal de part et d'autre de la bi-structure maillée extensible BISM1 l'un vers l'autre.

Une première solution de l'invention consiste à faire faire à chaque fil traversant dans son épaisseur la bi-structure BISM₁ d'un bord à l'autre : un aller-retour par un anneau en regard du dispositif permettant de regrouper les fils. Chaque fil effectuant un aller-retour permet d'allonger la distance de fil et de de diviser l'effort par deux.

En outre, un dispositif de démultiplication de l'effort pour tirer l'ensemble des fils regroupés par exemple sous forme d'un mini-palan ou d'un réducteur associé à une manivelle peut être combiné à la bi-structure de l'invention.

Un avantage de la bi-structure maillée extensible est qu'elle peut présenter de l'intérêt :
- pour l'utilisateur du produit final qui intègre la bi-structure comme par exemple une chaise pliante ;
- pour le transporteur d'une telle bi-structure, en termes de logistique, notamment pour le transport du matériau à destination du lieu de fabrication d'un produit plus élaboré qui l'incorpore.

Dans ce dernier cas, il est possible sur le lieu d'exploitation de supprimer les fils qui auront uniquement servi à comprimer le matériau durant le transport amont.

Selon un autre mode de réalisation, la bi-structure maillée extensible BISM1 comprenant un réseau de fils ou de fibres reliant deux couches maillées SM₁ et SM₂ peut comprendre des éléments longitudinaux extensibles comprenant une certaine rigidité telles que des tiges extensibles. A titre d'exemple, des tiges télescopiques permettant d'adapter leur longueur étendue maximale à la longueur de la bi-structure maillée extensible BISM₁ en position dépliée. Les tiges peuvent être de type « canne à pêche » ou de type « antenne extensible de poste radio ». Les tiges peuvent comporter un nombre de tronçons adaptés à différentes positions de pliage ou de dépliage de la bi-structure maillée extensible BISM₁. De telles tiges peuvent être réalisées en plastique, en fibre de carbone, en résine ou en métal.

L'utilisation de telles tiges extensibles permet de maintenir un pliage dans le plan de la bi-structure en limitant les effets de courbures de la surface pliée par compression. En outre, ces tiges peuvent amener une certaine rigidité à la bi-structure maillée extensible BISM₁. Ces tiges extensibles traversent avantageusement la zone inter-couches comprenant le réseau de fibres ou de fils ML. De ce fait, elle ne pénalisent pas le volume de la bi-structure qui conserve un encombrement optimisé dans sa position pliée et sa position dépliée.

Les tiges extensibles peuvent être fixées aux éléments longitudinaux 21. Notamment, les éléments longitudinaux 21 peuvent comprendre des ouvertures pour le passage de ces tiges extensibles et des moyens de fixation auxdits éléments longitudinaux 21. En outre, des moyens pour synchroniser le pliage de ces tiges extensibles peuvent être employés. A titre d'exemple, les éléments longitudinaux 21 peuvent servir de moyens permettant de synchroniser le pliage des tiges extensibles notamment en entrainant toutes les tiges extensibles qui y sont liées dans un sens de pliage ou de dépliage.

L'invention concerne donc des bi-structures BISM₁ que nous désignerons de type « fibreuse » lorsqu'elle correspondent au mode de réalisation de la figure 3 mais également des bi-structures BISM₂ que nous désignerons de type « alvéolaire » lorsqu'elle correspondent au mode de réalisation des figures 1, 2A, 2B, 2C, 2D.

Ces bi-structures peuvent être combinées avec des couches maillées de différentes sortes ou entre elles de sorte à fournir d'autres bi-structures ayant des propriétés souhaitées en termes d'efficacité de pliage, de confort ou de résistance pour former un support rigide.

Selon un troisième mode de réalisation d'une bi-structure maillée extensible BISM₃. Cette dernière comprend :
- une première structure maillée extensible SM₁ de type « alvéolaire » telle que décrite aux figures 1, 2A, 2B, et ;
- une seconde structure maillée extensible SM₂ qui comprend elle-même une bi-structure maillée BISM₁ telle que décrite à la figure 3, de type « fibreuse ».

La figure 4 représente un mode de réalisation d'une telle bi-structure BISM₃ combinant une couche de type alvéolaire avec une couche de type fibreuse.

La structure de cadre SC peut être fixée uniquement à la première structure maillée extensible SM₁ de type alvéolaire ou elle peut être également fixée à la structure maillée SM₂ comprenant une bi-structure BISM₁ de type fibreuse par les mêmes éléments longitudinaux 21.

En outre, selon un autre mode de réalisation, la bi-structure BISM₁ de type fibreuse peut être fixée au moyen de points de synchronisation 200 à la structure maillée SM₁ de type alvéolaire et éventuellement à des points de support 33 de la structure cadre SC, 21.

Les points de support 33 de la structure cadre SC peuvent donc être :
- des points de support des structures maillées SM₁, SM₂ ou des bi-structures BISM₁, BISM₂ alvéolaire et/ou fibreuse et ;
- des points de synchronisation des pliages des structures maillées SM₁, SM₂ ou des bi-structures BISM₁, BISM₂ entre elles.

A titre d'exemple, les lames 12 peuvent être reliées à leur(s) point(s) d'assemblage 120 par un oeillet, avec un trou en son milieu qui permet le passage de fils pour ligaturer la maille de la bi-structure de type fibreuse la plus proche.

Certains points de synchronisation 200 des structures maillées extensibles SM₁, SM₂ dans le cas de cette association de couches fibreuse et alvéolaire peuvent correspondre sensiblement à des points d'assemblage 120 des lames entre elles.

La figure 5 représente un quatrième mode de réalisation d'une bi-structure maillée extensible BISM₄. Cette dernière comprend :
- une première structure maillée extensible SM₁ comprenant une bi-structure BISM₂ maillée extensible comprenant deux couches de type « alvéolaire » telle que décrite aux figures 2C, 2D, et ;
- une seconde structure maillée extensible SM₂ qui comprend elle-même une bi-structure maillée BISM₁ telle que décrite à la figure 3, de type « fibreuse ».

La figure 5 représente un mode de réalisation d'une telle bi-structure BISM₄ combinant une couche étant elle-même une bi-structure maillée extensible de type « alvéolaire » avec une couche étant «également une bi-structure de type fibreuse.

La structure de cadre SC peut être fixée :
- uniquement à la première structure maillée extensible SM₁ de type alvéolaire de la bi-structure BISM₂ ou ;
- aux deux couches alvéolaires de la bi-structure BISM₂ ;
- aux deux bi-structures BISM₁ et BISM₂ de la bi-structure BISM4.

En outre, selon un autre mode de réalisation, la bi-structure BISM₁ de type fibreuse peut être fixée au moyen de points de synchronisation 200 à la bi-structure maillée extensible BISM₂ de type alvéolaire. Les points de synchronisation 200 de la bi-structure alvéolaire et de la structure fibreuse peuvent correspondre aux points de synchronisation 200 des deux structures maillées extensibles de type alvéolaire formant la bi-structure BISM₂ ou encore ils peuvent être choisis différents selon le mode de réalisation envisagé.

Différentes combinaisons intégrant différentes couches et différentes configurations de superposition peuvent être envisagées dans la bi-structure de l'invention. Par exemple, une configuration de type sandwich dans laquelle une structure maillée extensible SM₁ de type alvéolaire peut être prise en sandwich de part et d'autre par deux bi-structures de type fibreuse. Cette configuration est également envisageable dans l'invention en considérant une couche centrale de type bi-structure alvéolaire prise en sandwich par deux couches de types fibreuse. Ces deux dernières configurations sont particulièrement adaptées aux applications de matelas pliables qui peuvent donc être configurés selon la rigidité et le confort souhaité.

Pour lier mécaniquement la structure maillée extensible de type fibreuse et la structure maillée extensible de type alvéolaire comprenant un ensemble de lames, différentes techniques de soudage et/ou de collage sont possibles. On peut également utiliser la présence des oeillets pour ligaturer par un fil la maille de la structure de type fibreuse la plus proche.

Selon les combinaisons envisagées, la bi-structure peut être conçue de sorte que toute les couches sont en tensions dans une même position de pliage ou de dépliage et sont au repos dans une autre même position de pliage ou de dépliage.

Par exemple, la structure maillée extensible de type alvéolaire comprend des lames en position courbée lorsque la structure est dépliée. L'effort de compression permet de redresser les lames qui sont naturellement alvéolées. De ce fait, la structure maillée extensible alvéolaire nécessite un effort pour être comprimées en largeur. Avantageusement, la bi-structure maillée extensible de type fibreuse qui peut être combiné avec la structure maillée alvéolaire nécessite également un effort en compression pour être maintenue pliée. Un avantage de la bi-structure de l'invention est de coordonner les efforts de chaque couche extensible pour éviter que des efforts s'exercent entre couches pouvant notamment provoquer des déformations de la bi-structure de l'invention.
Selon une alternative, la bi-structure de l'invention peut utiliser une structure maillée extensible comprenant des lames qui au repos sont droites et non courbes, et ainsi qui exerce une force de rappel.

Selon une variante de l'invention, la bi-structure maillée extensible de type fibreuse, tel qu'un tissu 3D Spacer, est de façon nominale en position ouverte tel qu'il se présente notamment dans les matelas. Lors de la mise en oeuvre de la compression de la bi-structure, les mailles se resserrent en fonction du pliage de l'objet, et à la limite jusqu'à être jointives. Les mailles sont jointives lorsque les ouvertures des mailles se referment complètement sous la force de compression de sorte que les bords de part et d'autre d'une ouverture de chaque maille soient en contact.

Dans une autre variante de l'invention, la bi-structure maillée extensible de type fibreuse, tel qu'un tissu 3D Spacer, utilisée est fabriquée sous une forme déjà compressée. Sa position nominale est donc en position pliée. L'extension de la bi-structure est réalisée en exerçant une force latérale pour décomprimer la bi-structure en largeur. Dans ce cas de figure, les mailles du tissu sont resserrées dans leur position nominale. Il existe des machines à fabriquer le tissu dans lesquelles les mailles sont fabriquées en étant quasiment jointives.

Il est envisageable de stabiliser, par exemple, de façon physique ou chimique la structure nominale de la bi-structure maillée extensible de type fibreuse, tel qu'un tissu 3D Spacer. Dans cette configuration pliée, il est possible d'ajouter une contrainte latérale de compression et/ou une contrainte d'étirement dans le sens longitudinal.

Dans ce cas de cette variante, la bi-structure maillée extensible de type fibreuse, tel qu'un tissu 3D Spacer, est à mettre en extension pour obtenir la position dépliée ou étendue. L'obtention de la position fermée, qui est la position nominale, s'obtient avec moins d'effort, voire sans effort si la dimension nominale au repos correspond à la largeur attendue de l'objet pliable en position pliée.

Une telle solution est une alternative à la solution classique d'une bande de tissu tendue que l'on trouve dans les sièges pliants, les fauteuils pliants, fauteuils roulants pliants.

Un avantage d'une fabrication dans une position nominale pilée de la bi-structure maillée extensible de type fibreuse est que la structure cadre peut nécessiter moins d'éléments de maintien pour conserver une surface sensiblement comprise dans un plan lors du pliage et du dépliage de la structure ou de la bi-structure. Elle a l'avantage également de nécessiter moins d'efforts latéraux pour effectuer le maintien de la structure en position pliée.

Selon une autre variante de réalisation, une structure ou une bi-structure maillée extensible est une structure auxétique. La structure ou la bi-structure s'étire, ou s'accroit, dans les deux dimensions, c'est-à-dire en largeur et en longueur. Cette propriété est également décrite comme une structure ayant un coefficient de Poisson négatif. A titre d'exemple un 3D Spacer auxétique peut être utilisé comme structure ou bi-structure de l'invention.

Dans ce mode de réalisation, la structure cadre peut comprendre des moyens d'élongation et de raccourcissement dans les deux directions comme par exemple une double tige coulissante.

Un avantage d'une bi-structure maillée extensible de l'invention comprenant une structure ou une bi-structure maillée auxétique est que la bi-structure ne perd aucune largeur au bord lors d'un pliage. En utilisant une structure auxétique ou en combinant une structure non auxétique et une structure auxétique, la bi-structure de l'invention peut venir épouser en bord à bord la limite du périmètre de l'objet dans lequel la bi-structure est intégrée, comme par exemple une chaise ou un matelas.

Par ailleurs, il est également possible comme variante de structure cadre pliante, d'adopter une structure cadre caractérisée par un comportement auxétique.

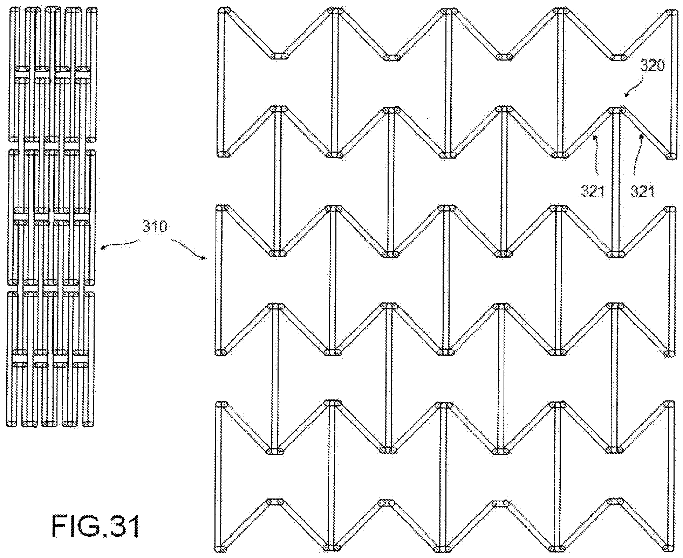

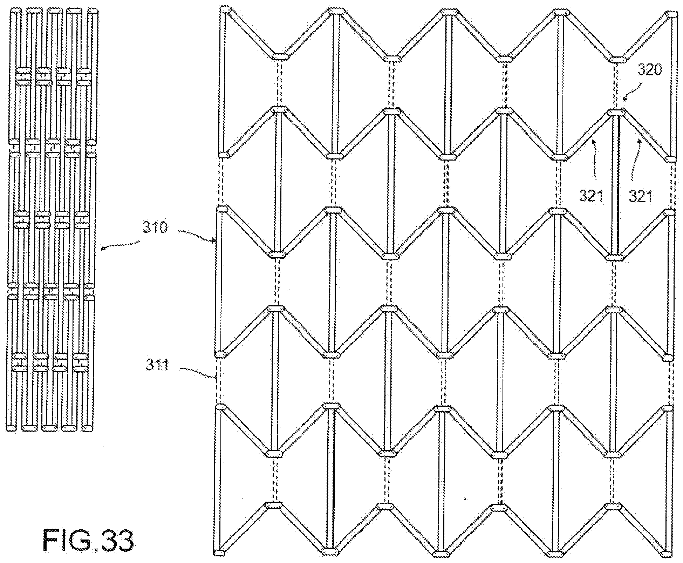

Pour intégrer ce type de structure dans un ensemble pliable, il est proposé comme illustré aux figures 31, 32, 33 de la compléter par des dispositifs de coulissement reliant les barres longitudinales qui sont alignées. Cela concerne en priorité les barres latérales, mais peut également s'appliquer à tout ou partie des barres intermédiaires.

Par ailleurs, les dispositifs de double articulations 320 peuvent intégrer :
▪ des ressorts de rappels, non représentés, pour (selon l'application) respectivement ouvrir ou fermer les compas 321 de façon à ce qu'en position nominale les ressorts amènent la structure en position ouverte ou fermée ;
▪ un système de verrouillage manuel pour ceux qui sont aux extrémités.

A noter que, selon les applications de l'invention, cette structure cadre auxétique, de part ses caractéristiques de compacité en mode pliée, peut être combinée :
- avec l'ensemble des variantes de structures maillées extensibles y compris celles qui intégreraient des éléments auxétiques ou ;
- avec les autres structures pouvant être simplement supportées et/ou mises en tension.

Les figures 31, 32, 33 montrent une structure cadre 310 pouvant se combiner avec une bi-structure maillée extensible de type structure auxétique de l'invention.

La figure 31 représente une structure cadre 310 dans deux positions : une position de pliage et une position de dépliage intermédiaire.

La figure 32 représente une structure cadre 310 dans deux positions : une position de pliage et une position de dépliage entièrement dépliée.

La figure 33 représente une structure cadre 310 dans deux positions : une position de pliage et une position de dépliage intermédiaire. Dans ce cas de figure la structure cadre est renforcée par une structure de renfort 311 comprenant des tiges coulissantes illustrée en pointillées dans une direction. Cette structure de renfort 311 permet de renforcer la tenue mécanique de la structure cadre 310.

Un intérêt d'une telle structure cadre est qu'elle est compatible d'une structure maillée auxétique qui s'étend en longueur et en largeur et inversement lors du pliage.

La figure 6A représente une autre structure maillé extensible SM₃ et également notée 10 en référence à la demande antérieure incorporée par référence. La structure maillée extensible SM₃ comprend des barres de liaisons en rotation autour de points de pivots 35 (non tous notés sur la figure 6A) que l'on nommera structure de type « pivotante ». Cette structure maillée est décrite dans la demande de brevet française N°1355292 déposée le 7 Juin 2013 au nom de Patrick Herbault. Le contenu de la demande antérieure et notamment les différentes variantes mentionnées de structures maillées comprenant des barres de liaisons pivotantes sont incorporées par références dans la présente description.

Selon la présente invention, cette structure maillée pivotante peut être combinée avec :
- une structure maillée extensible de type alvéolaire ou ;
- une ou plusieurs bi-structure(s) maillée(s) extensible(s) de type alvéolaire BISM₂ ;
- une ou plusieurs bi-structure(s) maillée(s) extensible(s) de type fibreuse BISM₁ ;
- toute combinaison d'une ou plusieurs bi-structures maillées extensibles BSM₁ de type fibreuse avec une ou plusieurs bi-structures maillées extensibles BSM₂ de type alvéolaire formant une pluralité de couches extensibles.

La figure 6B représente une telle structure maillée extensible dite pivotante en position pliée. La largeur l₂ de la bi-structure maillée de l'invention étant réduite vis-à-vis de sa largeur l₁ en position dépliée représentée à la figure 6A.

Des éléments de liaisons 30, 30' fixe ou mobile sur les éléments longitudinaux 21 de la structure de cadre 20 permet d'adapter la variation de hauteur de la structure maillée lors du parcourt des différentes positions de pliage et de dépliage. Ces éléments de liaison sont décrits dans la demande de brevet française N°1355292 déposée le 7 Juin 2013 au nom de Patrick Herbault. Le contenu de la demande et notamment les différentes variantes de ces éléments de liaison dans cette demande antérieure sont incorporées par références dans la présente description.

La bi-structure de l'invention peut être combinée selon un mode de réalisation avec une structure de maintien 20. La structure de maintien 20 permet notamment de maintenir la bi-structure BISM₁, BISM₂, BISM₃, BISM₄, etc. dans une position de dépliage et/ou de pliage.

Une fonction principale de la structure de maintien 20 est de maintenir dans les différentes positions de pliage et de dépliage la bi-structure maillée extensible BISMᵢ de l'invention notamment grâce à un mécanisme de verrouillage. Elle permet éventuellement de rigidifier cette dernière et d'accompagner le pliage ou le dépliage.

Deux exemples de structures de maintien sont représentés aux figures 7 et 8.

D'autres structures de maintien sont décrites dans la demande de brevet française N°1355292 déposée le 7 Juin 2013 au nom de Patrick Herbault. Le contenu de la demande et notamment les différentes variantes de structures de maintien 20 décrites aux figures 6, 7, 8, 9, 12, 13, 14, 15, 16, 22 à 28 dans cette demande antérieure sont incorporées par références dans la présente description.

Dans le cas de la figure 7, la structure de maintien 20 comprend des éléments de liaisons décrivant en position dépliée une forme d'un croisement en « X » des diagonales. Cette structure de maintien 20 comprend une croix centrale qui peut être déclinée en version fixe avec des éléments de liaisons comme représenté sur la figure 7 ou en version coulissante dans laquelle les bras sont coulissants comme cela est représenté sur la figure 8.

La figure 8 représente une variante d'une structure de maintien 20 qui peut être combinée à une bi-structure de l'invention en forme de « H ». Cette variante permet d'optimiser l'encombrement en position pliée. La hauteur de la structure de maintien ne varie pas ou très peu entre la position dépliée et la position pliée. Ceci confère à la bi-structure de l'invention un avantage notamment sur la faible variation de hauteur de la bi-structure entre une position pliée et une position dépliée notamment au regard du mode de réalisation de la figure 6A et 6B qui nécessite une plus grande variation de la hauteur entre les positions pliées et dépliées de la structure de maintien 20. L'optimisation en hauteur de la bi-structure de l'invention permet de définir une variante dans laquelle à la fois les diagonales 210 et des demi-compas 22 avant et arrière sont au même niveau. Les compas 22 forment une structure de renfort qui peut être combinée à la bi-structure de l'invention pour renforcer le maintien transversale. La structure de renfort 22 peut être également d'un autre type qu'un compas. Son avantage est d'offrir une pluralité de points de support transversaux sur toute la longueur transversale. La solution des compas 22 permet de réduire l'encombrement en hauteur et d'autre part offre un support sous forme d'une surface plane pour chaque structure maillée extensible SM₁ ou SM₂.

La structure de maintien en forme de « H » permet d'obtenir une très bonne compacité et offre également en position dépliée des points de support centraux à la bi-structure de l'invention sur toute la longueur des diagonales 210, de la même manière que la croix 211 qui offrent une pluralité de points de support centraux à la bi-structure de l'invention.

Le système central représenté à la figure 8 est réalisable sur la demi-hauteur uniquement sur la zone d'intersection. En outre, les demi-diagonales coulissantes 210 peuvent être presque égales à la demi-longueur en position pliée ce qui donne la meilleure rigidité en position déployée.

Enfin, dans cette variante, l'articulation centrale des demi-compas 22 peut adopter une solution à double articulation pour gagner encore en compacité, notamment dans le cas d'un carré qui dispose encore de moins de place pour les ranger.

Un avantage de la structure de maintien 20 est qu'elle offre une possibilité de combiner différentes structures de pliages centrales ou transversales permettant de multiplier les points de support à une bi-structure de l'invention, les points de support pouvant être transversaux ou centraux tout en permettant d'accompagner le pliage de la bi-structure.

La bi-structure de l'invention comprend selon un mode de réalisation un revêtement. Selon une variante de réalisation, le revêtement est un tissu. Dans un exemple de réalisation, la bi-structure maillée extensible peut être associée avec un dispositif enrouleur. Dans ce cas, un tel dispositif enrouleur peut être intégré dans un corps creux de la structure de cadre SC ou dans la structure de maintien 20 dans un corps creux dédié à l'usage du dispositif enrouleur. Ce dispositif enrouleur assure également la fonction de « carter ».

La bi-structure de l'invention peut être recouverte si besoin d'un garnissage en fonction de l'usage.

Différentes applications peuvent être envisagées à partir de la bi-structure de l'invention.

Une première application concerne celle des chaises roulantes telles que celle représentée à la figure 9. La bi-structure maillée extensible peut être intégrée dans l'assise d'une telle chaise ou le dossier. Lors du pliage de la chaise roulante, le pliage de la bi-structure maillée extensible se plie dans son propre plan par compression des lames ou de la couche fibreuse.

Une seconde application concerne celle des tapis de sol pliable, matelas pliable, coussin à langer transportable. Différentes combinaisons de superposition de structures maillées définissant une bi-structure peuvent être envisagées selon les cas de figures.

Selon les cas de figure, la bi-structure peut comprendre une structure de maintien ou une structure de renfort. Par exemple, selon les cas de figures, la bi-structure peut être combinée ou pas avec de telle structure de maintien ou de renfort. Lorsque la bi-structure est destinée à un usage sur une surface déjà existante telle qu'une table telle qu'une table à langer ou un sol, une structure de lit tel qu'un sommier.

Selon le volume nécessaire de la bi-structure de l'invention en position dépliée ou du volume souhaité en position plié, différentes associations de couches et de combinaisons avec une structure de maintien peuvent être adaptées.

Le pliage par compression peut être réalisé en longueur ou en largeur selon l'orientation des mailles dans la bi-structure de type fibreuse.

Pour un lit classique adulte, la bi-structure peut comprendre les dimensions suivantes : 60 cm x 180 cm ou pour un lit de bébé 60 cm x 120 cm.

En outre lorsque la bi-structure de l'invention comprend au moins une structure maillée extensible de type alvéolaire, l'ensemble de lames utilisées peuvent être définies souples et reliées entre elles en quinconce.

A titre d'exemple, un ensemble d'une vingtaine de lames de 2 cm de largeur, reliées entre elles tous les 15 cm par un oeillet peut être utilisé pour définir une surface d'un lit pliable ayant une certaine rigidité. Lorsqu'une bi-structure maillée extensible de type fibreuse est associée à la structure maillée extensible de type alvéolaire, la présence de l'oeillet permet le passage des fils qui comprime la structure fibreuse.

Dans ce cas, la structure maillée extensible comprenant des lames conduit à un taille de maille plutôt grande, qui si on le souhaite peut être réduite en superposant une nouvelle structure maillée extensible comprenant un plus grand nombre de lames plus fines comme cela a été décrit précédemment.

Une façon de réaliser cette structure maillée extensible comprenant des lames plus fines consiste à dédoubler les premières lames sur une partie de la hauteur et de réaliser des mailles à une échelle ½ en largeur et ½ en hauteur soit ¼ en surface.

En fonction de la technologie, cette opération de réduction de la taille des mailles peut être itérée.

Une bi-structure peut être utilisée au sol comme un tapis de sol mais également comme surface portante d'une étagère d'un meuble ou d'une fonction sommier d'un lit, sur un couple de profilés latéraux par exemple de tasseaux en bois ou insérés dans des profilés aluminium en « U » dont les fonds seraient fixés aux cloisons par exemple d'une armoire, ou aux parois intérieures d'un cadre de lit.

Selon d'autres applications, la bi-structure peut être utilisée pour former des cloisons, étagères, des kits d'assemblage de meubles. Dans ce dernier, cas l'invention profite à la transportabilité d'un kit d'assemblage peut encombrant. La bi-structure peut également être utilisée dans un coussin par exemple un coussin de canapé, mais dont a défini un mode de compression latérale qui en facilite le transport et le stockage.

La bi-structure peut être employée pour former l'assise ou le dossier d'une poussette pliable dont la compression est compatible de la cinématique de pliage et de dépliage de cette dernière.

Une telle poussette est par exemple décrite dans la demande de brevet française N°1355292 déposée le 7 Juin 2013 au nom de Patrick Herbault. Le contenu de la demande et notamment le mode de réalisation de la poussette décrit dans cette demande antérieure sont incorporées par références dans la présente description.

D'autres applications peuvent être envisagées grâce à la bi-structure maillée extensible de l'invention faisant bénéficier de surfaces ayant une rigidité donnée, un confort et un ratio de pliage important. Parmi ces applications on cite : un intérieur d'un carter, un fond ou une paroi d'un contenant, un landau pliant, un chariot pliant, un table pliante, un siège pliant, un brouette pliante, une civière pliante.

La figure 10 représente une bi-structure maillée extensible de l'invention BISM₅ comprenant trois structures extensibles superposées comprenant chacune des mailles de différentes tailles. Les structures sont liées entre elles par des points de liaisons. Dans ce mode de réalisation, les points de liaisons sont réalisés naturellement par un procédé de conception 3D. Les trois structures superposées comprennent une continuité de matière par fabrication au niveau des points de liaison.

A titre d'exemple d'une réalisation selon l'invention, une structure de 240 mm de long sur 40 mm de hauteur comprend trois niveaux superposés de lames : un niveau de 24 lames large d'épaisseur 2 mm, un deuxième niveau de 48 lames d'épaisseur 1 mm, et un troisième niveau de 96 lames de 0,5 mm.

La figure 11 représente un autre exemple de bi-structure maillée extensible BISM₆ comprenant une superposition de 5 structures maillées. La bi-structure maillée extensible est représentée en position ouverte et la superposition des structures maillées comporte différentes dimensions de mailles selon les structures maillées.

Les structures extérieures, ou « périphériques » ont des mailles de plus petites tailles que les structures directement liées aux structures internes de l'assemblage.

La structure centrale est la structure comprenant des mailles de plus grandes tailles que les quatre autres structures maillées. Les structures intercalaires située entre les structures périphériques et la structure centrale comprend des mailles de tailles moyennes, dont les dimensions sont entre les mailles de petites tailles de la structure périphérique et les grandes mailles de la structure centrales.

La figure 12 représente la bi-structure maillée extensible BISM₆ de la figure 11 dans une configuration pliée. La bi-structure BISM₆ en position fermée est comprise ici dans un volume de 240 mm de long sur 40 mm de hauteur et environ 48 mm de largeur.

Dans les solutions des figures 10 à 12, il est rappelé que la dimension en hauteur des lames permet de créer un profil sur sa face supérieure. La technique d'impression 3D permet de réaliser un prototypage, mais également une solution sur mesure pour créer un objet complètement adapté à la physiologie, à la morphologie d'un personne sous réserve de disposer d'un modèle numérique par exemple issu d'un scanner pour adapter en creux et/ou en relief le profil souhaité spécifique à la personne, à l'application spécifique.

En outre, la superposition de structures maillées ainsi interconnectées apporte d'une part une plus grande résistance au flambage et d'autre part une plus grande résistance à la torsion.

De plus en raison de sa souplesse, cette solution autorise un léger galbe de quelques centimètres qui est à agencer sur la structure de maintien soit en ajoutant des profils adéquats en interface soit en galbant les liaisons elles-mêmes. Ceci est pertinent dans certains cas liés à la physiologie pour un dossier, pour une assise, pour un support à langer un bébé, pour une civière. Les différentes éléments pouvant intégrer la bi-structure maillée extensible de l'invention étant rendus pliant.

Il est également possible de créer le galbe sur la face externe de la structure maillée 10, en particulier dans le cas d'une bi-structure alvéolaire, telle que décrite ou voisine de type nid d'abeille par une épaisseur variable réalisant en creux et/ou en relief le profil souhaité.

D'autres applications peuvent tirer un bénéfice d'une bi-structure maillée extensible de l'invention rendant les objets dans laquelle elle est intégrée pliant. Parmi ces objets ou ces applications, l'invention concerne les éléments d'un siège que sont l'assise, le dossier et le repose mollets que cela soit pour un bébé, un enfant ou un adulte. Elle peut s'appliquer à un rehausseur, un siège auto, à un hamac ou un siège de poussette.

Un exemple de réalisation d'un rehausseur comprenant une bi-structure maillée extensible de l'invention est représenté en position pilée et dépliée aux figures 13 et 14.

Dans la suite de la description, il est envisagé différentes structures maillées extensibles et différentes structures cadres pouvant se combiner avec les précédentes structures maillées extensibles de l'invention.

On précise à cet égard différentes notions qui peuvent être traitées par la suite.

On entend dans la suite de la description par « une structure antiparallélogramme », une structure formant effectivement un antiparallélogramme, c'est-à-dire un quadrilatère croisé dont les côtés non adjacents sont de même longueur formant à l'intérieur une croix pliable.

En outre, un antiparallélogramme comprend différentes propriétés dont : les angles opposés de la structure formant la croix ont la même mesure. Dans un antiparallélogramme, les diagonales sont parallèles et il admet un axe de symétrie qui est la médiatrice des diagonales. Il est également à noter qu'un antiparallélogramme est inscriptible dans un cercle et que deux côtés opposés ont leur point d'intersection situé sur cette médiatrice.

On désigne indifféremment une « structure de maillage » ou une « structure maillée » dans la description.

La figure 15 représente un exemple de structure cadre et d'une structure de maintien comprenant des barres de liaison fixes et/ou coulissantes :
• Elle est renforcée en particulier au niveau des articulations/pivots de façon à ce que en plus d'assurer la contribution à la cinématique dans le plan parallèle, elle soit capable de résister à une force perpendiculaire d'une à plusieurs dizaines de déca Newton en ne se déplaçant que de quelques millimètres.
• Elle est agencée de façon à ce qu'en position finale de dépliage, les points d'appuis de la structure de maintien viennent se positionner en regard des points de la structure de maillage avec un jeu faible, voire nul.

L'ensemble formé par la bi-structure maillée et la structure de maintien et la structure cadre réalise une bi-structure maillée extensible inscriptible dans une forme géométrique rectangulaire extensible en largeur, également appelée « structure extensible pliable ». Ladite bi-structure est intégrable dans une structure pliable existante ou est capable de contribuer à la cinématique globale d'un objet, ou de fonctionner de façon indépendante.

En particulier elle peut s'intégrer dans un système qui dispose déjà un système de pliage central, comme par exemple un croix pliable, ou contribuer à la cinématique du système de pliage central soit encore devenir le coeur du système de pliage central.

Plusieurs bi-structure maillée extensible peuvent également être présentes dans différents plans d'un même objet pliable et synchronisées entre elles.

Des positions intermédiaires de pliage sont possibles selon des modes de réalisation de l'invention contrairement à des solutions à base de toile/tissu tendu, ce qui peut offrir une latitude de réglage en largeur en fonction de l'encombrement dimensionnel des objets. Par exemple, lorsque l'invention est appliquée à une poussette ou un landau, il est possible d'obtenir un réglage de la position de dépliage en fonction de la taille d'un bébé ou de la corpulence d'un adulte dans une autre application.

Selon les cas de figures, la structure de cadre peut exercer la fonction de structure de maintien. La structure de maintien a pour fonction de bloquer la bi-structure dans différentes position de pliages alors que la structure cadre a pour fonction de maintenir le pliage de la bi-structure sensiblement dans un plan lors du pliage ou du dépliage.

La figure 15 représente un mode de réalisation dans lequel la structure cadre est la structure de maintien 20. Elle comprend une structure de renfort transversale 22, 22'permettant de maintenir la structure en position de dépliage. En outre, la structure de renfort transversale 22, 22' permet d'accompagner les mouvements de pliage et dépliage.

On désigne ci-après la structure de renfort transversale 22, 22' par la numérotation simple 22 qui comprend de manière implicite tous les éléments de ladite structure. Lorsqu'il s'agit d'un mode de réalisation particulier, la différenciation entre l'élément 22 et l'élément 22' est précisée.

La structure de renfort transversale 22 comprend dans l'exemple de la figure 15 une première structure transversale avant 22 et une structure transversale arrière 22', chacune étant reliée respectivement aux deux extrémités avant des barres de liaisons 21 et 21' et aux deux extrémités arrière des barres de liaisons 21 et 21'.

La structure de renfort transversale 22 offre des appuis supplémentaires concernant les côtés transversaux, le long de la périphérie de la structure rectangulaire.

Un mode de réalisation peut être obtenu au moyen de barres télescopiques positionnées entre les deux coins avant droit et avant gauche de la structure rectangulaire.

Cependant, ce mode de réalisation permet d'obtenir des ratios de 1 à 2 aisément mais devient plus complexe à mettre en oeuvre pour obtenir des ratios entre les positions pliées et dépliées de l'ordre de 1 à 4 ou 1 à 5.

La figure 15 représente une alternative à la solution des barres télescopique qui elle n'est pas représentée.

Selon le mode de réalisation de la figure 15, la structure de renfort transversale 22 comprend au moins un premier compas 22 reliant les coins avant de la structure maillée. Elle peut comprendre un second compas dans un mode amélioré tel que le compas 22' disposé aux extrémités arrière de la structure maillée comme cela est représenté. Les compas forment une structure à barres de liaison pliante.

Le premier compas 22 avant comprend deux bras 223 et 222 pivotant autour d'une liaison pivot 22. Le second compas 22' arrière comprend deux bras 223' et 222' pivotant autour d'une liaison pivot 221.

Selon les modes de réalisation, la structure de renfort transversale comprend des barres de liaison fixes et/ou coulissantes.

Selon un mode amélioré, la structure de renfort transversale 22 peut être renforcée en particulier au niveau des articulations formant des liaisons pivots. Ce renfort permet, outre à assurer une contribution à la cinématique dans le plan parallèle, à la bi-structure de résister à une force perpendiculaire d'une à plusieurs dizaines de déca Newton en ne se déplaçant que de quelques millimètres.

Parmi les solutions de renfort correspondant à autant de mode de réalisation de l'invention, on trouve :
- Une mise en oeuvre d'un renfort au niveau de la liaison pivot elle-même, par exemple par un usinage adapté comprenant un faible jeu ;
- Une augmentation du diamètre de la liaison pivot sur une partie angulaire offrant une surface de contact plus importante ;
- Une augmentation du nombre de barres de liaison par exemple en doublant les barres de liaisons en les faisant fonctionner en parallèle typiquement de un à plusieurs centimètres de distance ;
- Une prolongation d'au moins une barre de liaison d'un compas de plusieurs centimètres au-delà d'un point pivot de façon à ce que ce prolongement puisse fournir ou trouver un appui sur une autre barre en regard ou sur une interface adaptée ;
- Une combinaison des solutions précédentes.

Selon la figure 15, la solution représentée est celle d'une prolongation d'une barre de liaison. Notamment, la partie prolongée 224 de la barre 223 s'étant au-delà du point de pivot 221.

Les zones de recouvrement 224 permettent de renforcer la tenue mécanique de la structure de renfort transversale 22 et offre un support plus robuste à la structure maillée 10.

Une solution pour augmenter la robustesse du demi-compas 223 est de réaliser un profilé en forme de « U » et prolongé en son extrémité par la partie 224. L'autre demi-compas 222 peut avoir un profil carré ou également en U venant s'insérer à l'intérieur du profil en forme de « U », l'ouverture du U étant horizontale dirigée vers l'extérieur.

Cette solution présente la caractéristique de pouvoir verrouiller le dispositif en position ouverte. Le déverrouillage peut être effectué de manière manuelle à chaque extrémité ou bien de façon automatique de façon synchronisée avec d'autres verrouillage/déverrouillage de la bi-structure.

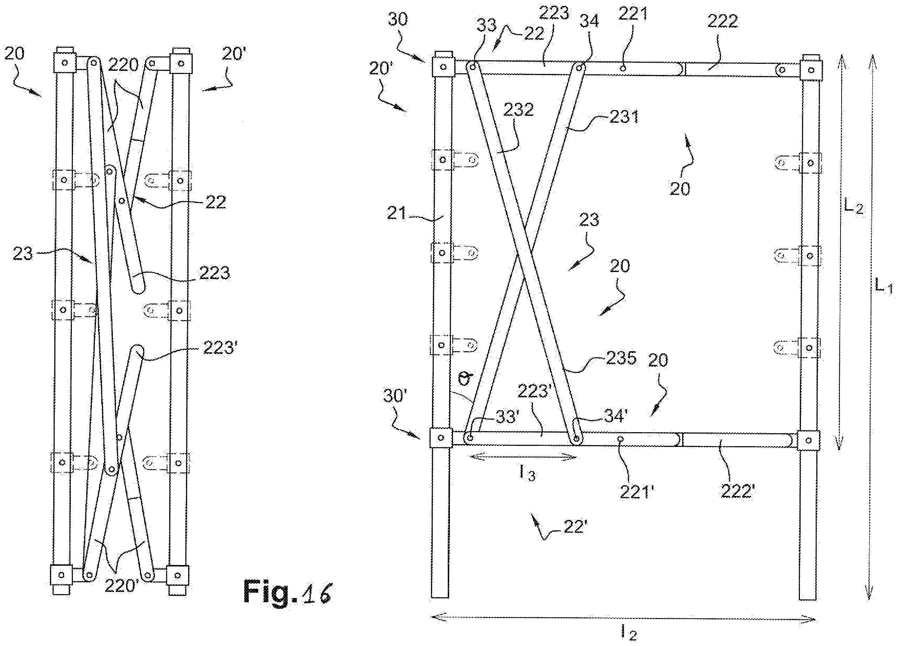

Dans une variante de réalisation représentée à la figure 16, la structure de maintien 20 comprend :
- structure de renfort transversale 22 ;
- un dispositif de renfort de support 23.

Le dispositif de renfort de support 23 est indépendant d'un éventuel autre dispositif de verrouillage propre à la structure de renfort transversale 22. Dans le cas de la figure 16, le dispositif de renfort transversale 22 est un compas comportant une liaison pivot 221 autour duquel deux bras pivotent. Un demi-bras 222 comporte une barre de liaison coulissante de sorte à être compatible d'un pliage du dispositif de renfort de support 23.

Selon la figure 16, un dispositif de renfort de support 23 est agencé sur le côté gauche de la structure de maintien 20 tel que représenté sur la figure. Dans cette solution, de chaque côté de la structure de maintien 20, un antiparallélogramme 235 est fixé en deux points 33, 34 d'un demi-compas 223 à l'avant et en deux points 33' et 34' d'un demi-compas 223' à l'arrière.

L'antiparallélogramme 235 comporte deux barres 232 et 231 de longueur identique. Dans le mode de réalisation de la figure 16, les extrémités de l'antiparallélogramme 235 sont fixées sur chaque demi-compas 223 et 223' situés respectivement à l'avant et à l'arrière de la structure de maintien 20.

La longueur des barres est calculée pour que :
- En position fermée, l'antiparallélogramme 235 soit quasiment fermé mais pas tout à fait pour éviter son inversion.
- En position ouverte, les demi-compas soient alignés.

Les petits côtés l₃ de l'antiparallélogramme 235 sont en ordre de grandeur sensiblement égal à la longueur de la variation L1 -L2 séparant les deux structures de renfort transversales 22 et 22' dans les positions de pliage et de dépliage. L'égalité est vraie au cosinus près de l'angle θ. L'angle θ est formé entre une des barres 231 de l'antiparallélogramme 235 et la barre de liaison 21.

Les grands côtés de l'antiparallélogramme 235 sont en ordre de grandeur sensiblement égaux à l'hypoténuse du triangle formé en position ouverte par le petit côté l₃ et la longueur L2.

Dans cette variante, l'autre demi-compas 222 est réalisé par une liaison coulissante du fait de sa variation de longueur.

Selon un autre mode de réalisation, le demi-compas 222 peut être supprimé en prolongeant l'autre demi-compas 223 pour couvrir la largeur totale l₂ de la structure de maintien 20 sous réserve d'avoir en regard un dispositif d'accueil de type ergot qui vient entrer puis s'encastrer dans une fente, garantissant ainsi son maintien.

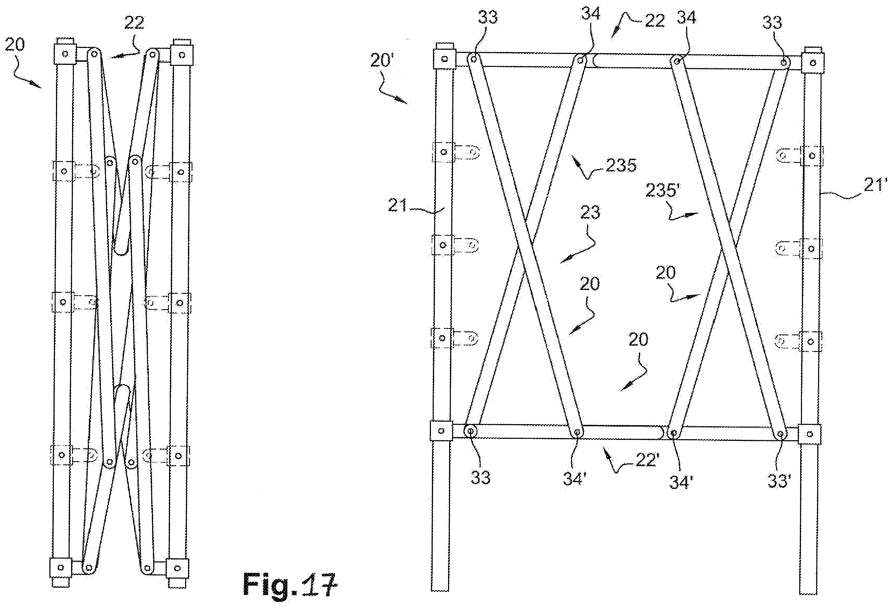

Il est possible d'utiliser également un antiparallélogramme par côté. La figure 17 représente le cas où un second antiparallélogramme 235' est agencé sur le côté droit de la structure de maintien 20, reliant également l'avant et l'arrière en quatre points désignés sur cette figure par les points 33, 34 à l'avant et les points 33' et 34' à l'arrière

La figure 18 représente un mode de réalisation dans lequel les barres de liaisons longitudinales 21, 21' peuvent être supprimées. En effet, les deux antiparallélogrammes 235 et 235' peuvent remplir la fonction des barres longitudinales. Les antiparallélogrammes 235 et 235' offrent au moins deux points de supports à la structure maillée 10 et contribue sur toute la longueur de chacune de ses barres à porter la structure maillée 10. Des interfaces, telles que celles représentées à la figure 19, peuvent être disposés sur les barres de l'antiparallélogramme 235 en prenant en compte :
- la distance entre le plan de la structure maillée 10 et la barre concernée par la pose d'une interface ;
- le chevauchement des barres pouvant interférer avec l'interface.

La bi-structure comprend alors une structure ou une bi-structure maillée 10 maintenue par une structure de maintien 20. La structure de maintien 20 comprend :
- une structure de renfort transversale 22, 22' comprenant chacune deux barres de liaison sans liaison entre elles, les barres de liaison pivotant chacune autour d'une liaison pivot située sur un coin à l'avant de la structure maillée 10 ;
- un dispositif de renfort de support 23 comprenant deux antiparallélogrammes 235, 235'

Le fait que la structure puisse se déplier/replier uniquement en étant tenue par les quatre coins est une caractéristique qui peut être avantageuse car moins encombrante structurellement et moins complexe à ajuster dans la synchronisation des différents pliages des éléments composant la bi-structure.

La cinématique des variantes décrites de la bi-structure est équivalente à la cinématique d'une croix de Mac Laren. Ceci est un avantage pour l'implanter la solution de l'invention dans un équipement destiné à être plié, telle qu'une poussette par exemple, en lieu et place d'une croix. La bi-structure offre un plateau robuste permettant de supporter des objets d'un poids important de plusieurs dizaines de kilos. Dans ce cas la bi-structure forme une bi-structure extensible portante et pliable de forme rectangulaire.

Il est possible de combiner une telle bi-structure avec une croix si elle est positionnée dans un plan parallèle à ladite croix.

La figure 20 représente différents exemples de barres permettant d'offrir la structure maillée un jeu longitudinal vis-à-vis de la structure de maintien 20 lors du pliage de la bi-structure. Selon les points de support utilisés qui permettent d'établir la liaison entre la structure maillée 10 et la structure de maintien 20, différents éléments peuvent être mise en oeuvre.

Des barres de liaison 21, 21' comme représentées à la figure 16 sont équivalentes aux solutions de la figure 20. Les barres de liaisons 21, 21' sont maintenues à la structure maillée 10 au moyen d'éléments de liaison 30, 30', équivalent aux liaisons 2160 de la figure 20. Des éléments de liaisons 30 sont fixes sur la barre de liaison 21, 21' et d'autres éléments de liaison 30' forme une liaison glissière avec la barre de liaison 21, 21' de sorte à autoriser le pliage de la bi-structure.

Une barre coulissante 215 comprenant deux tubes coulissants l'un dans l'autre au niveau d'un point de coulissement 2150.

Une barre 216 comprenant un manchon 2160 coulissant pouvant supporter un point de support pour fixer la structure maillée 10.

Une barre 217 comprenant une ouverture oblong 2170 permettant un jeu longitudinal d'une pièce solidaire de la structure maillée insérée et coulissante dans le trou.

Une barre 218 comprenant des éléments 2180, 2180' amovible en rotation autour d'un point de pivot de la barre 218.

Toute ces solutions permettent d'ajuster au cas par cas la différence de longueur entre la logeur L1 de la bi-structure et la longueur L1' de la structure maillée représentée à la figure 10Z.

Les modes de réalisations des figures 6A et 15 à 18 peuvent être adaptés aux différentes solutions de la figure 20.

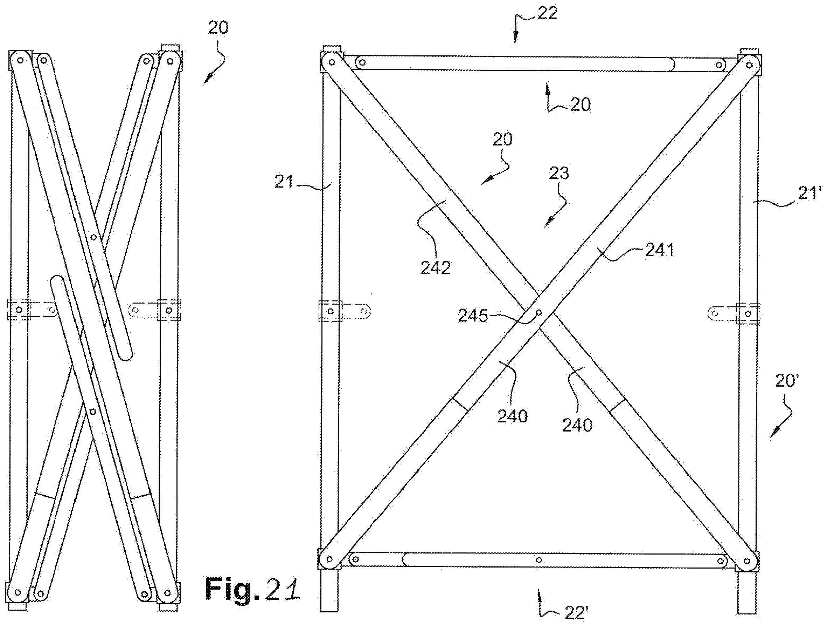

La figure 21 représente un mode de réalisation d'une structure de renfort de support ayant la forme d'une croix 240 en position de dépliage. Un système de barres coulissantes 240 comporte alors deux barres 241 et 242. Chacune des barres 241, 242 coulisse lors du pliage ou dépliage de la bi-structure.

Des interfaces, telles que celles représentées à la figure 19, peuvent être disposés sur les barres de la croix 240 en prenant en compte :
- la distance entre le plan de la structure maillée 10 et la barre concernée par la pose d'une interface ;
- le chevauchement des barres pouvant interférer avec l'interface.

Cette structure de renfort de support offre un point de support supplémentaire au centre de la croix, ce point étant simple dans la mise en oeuvre d'une solution d'une pose d'interface. En effet, ce point est indépendant du chevauchement des barres 241, 242 lors du pliage ou dépliage et il permet de proposer un point d'appui central 245 offrant une répartition symétrique des efforts de support.

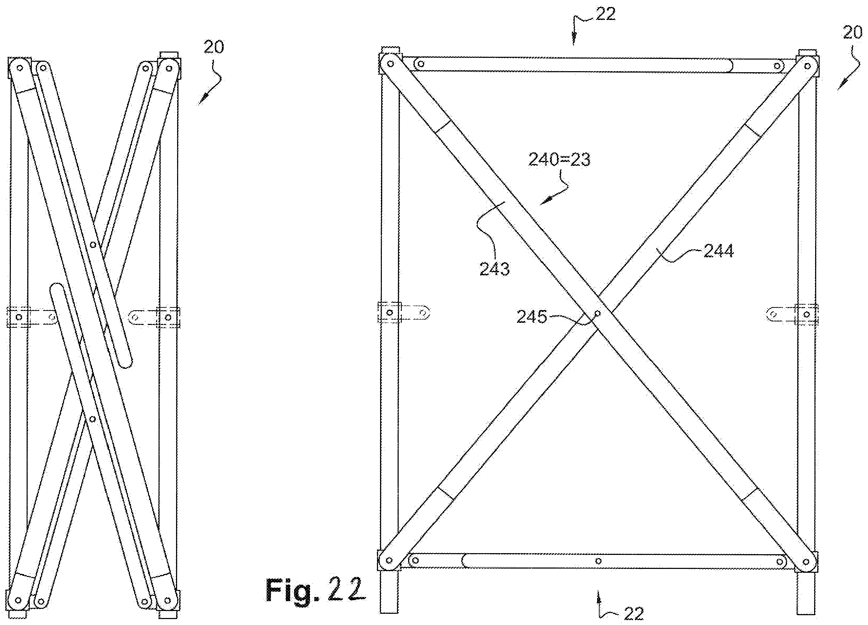

La figure 22 propose une alternative à la figure 21 dans laquelle deux barres coulissantes 243, 244 sont chacune doublement coulissante en chacune de leur extrémité. Dans ce mode de réalisation, il est possible de conserver une liaison pivot au croisement des deux diagonales 243, 244. Chaque barre correspond en position de dépliage à deux demi-diagonale coulissante.

Cette variante plus complexe dans sa mise en oeuvre apporte néanmoins les avantages suivants :
- La présence d'un point pivot central qui autorise une fixation positive avec le point de la structure maillée 10 positionnée en regard ;
- Un gain en hauteur possible en faisant se croiser localement par exemple des demi-hauteurs de barres coulissantes
- Une possibilité si besoin de galber localement au centre la croix.

La structure de maintien 20, pouvant former également une structure cadre, est performante en tant que solution compacte en hauteur, la compacité en hauteur est maximale notamment lorsque le nombre de couches des différents éléments peuvent être inscrites dans un plan de faible épaisseur.

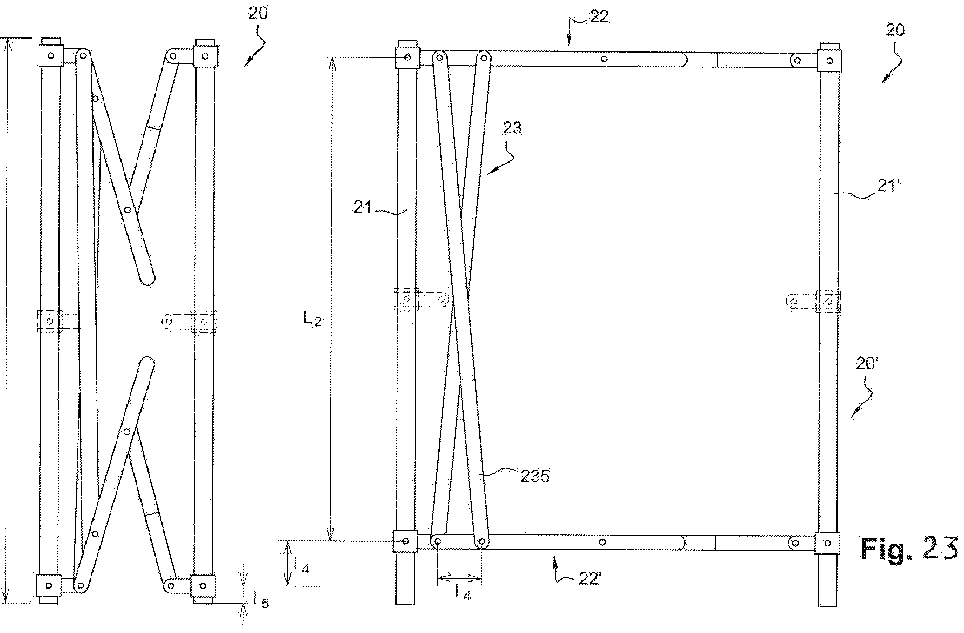

La figure 23 représente des variantes comprenant un dispositif de renfort de support 23 à antiparallélogrammes avec une largeur plus petite que les solutions à antiparallélogramme précédentes.

Dans la figure 23, la longueur des côtés des antiparallélogrammes est en ordre de grandeur la variation L₁ - l₄ de longueur de la bi-structure, à l'excès de longueur l₅ des barres de la structure cadre près. Dans cet exemple, la variation est sensiblement proche de 4 centimètres. Cet exemple permet de peu faire varier la longueur L₁ de la structure de maintien 20.

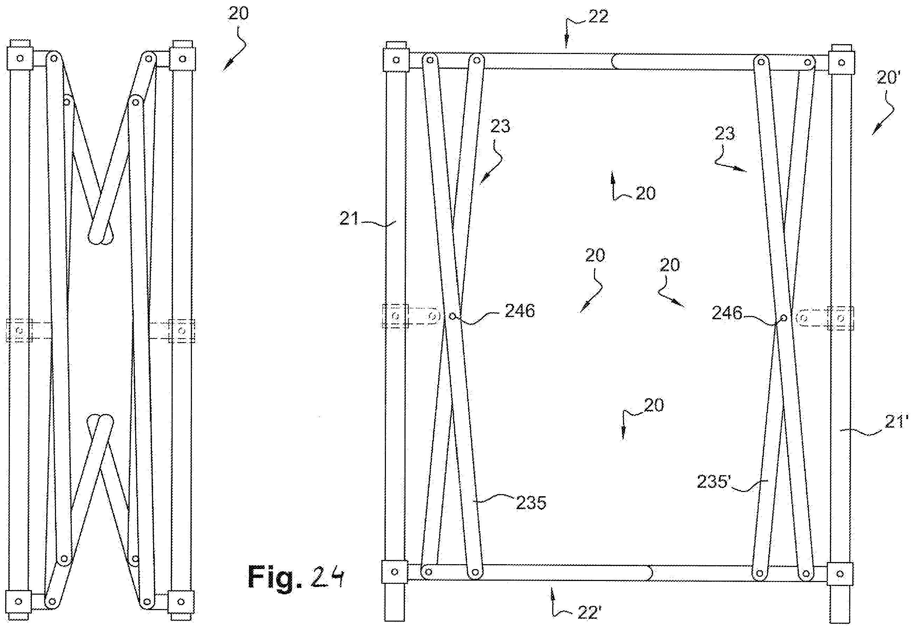

La figure 24 permet de représentée une structure de maintien 20, pouvant former également une structure cadre, comprenant un dispositif de renfort de support 23 comprenant deux antiparallélogrammes 235, 235' situés de part et d'autre de la largeur de la structure de maintien 20 à l'intérieur du périmètre rectangulaire.

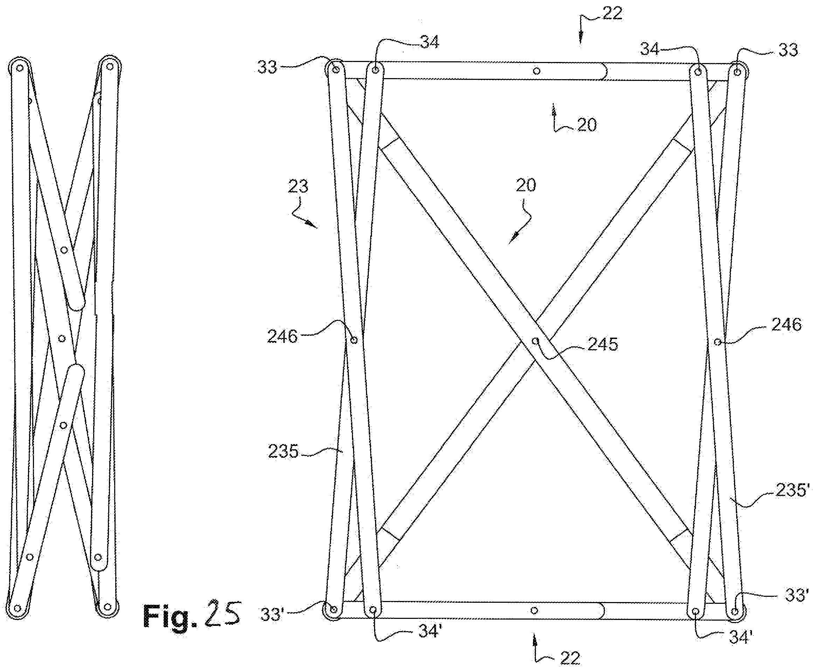

La figure 25 représente un mode de réalisation dans lequel le dispositif de renfort de support comprend une croix centrale coulissante combinée avec deux antiparallélogrammes.

Un mode d'assemblage d'une bi-structure, peut consister en :
- un premier choix d'un dimensionnement d'une structure de maintien 20 telle que décrite ;
- un second choix optionnel d'un dimensionnement d'une structure cadre 20' et ;
- un troisième choix adaptée d'une structure maillée compatible à quelques centimètres près.

Notamment, dans la variante de réalisation, par exemple de la figure 25, le dimensionnement de la structure cadre 20' n'intervient pas car le pliage et le dépliage sont effectués uniquement en étant tenue par les quatre coins de la structure rectangulaire.

Les structures de maintien, de cadre ou de renfort des figures 15 à 25 peuvent se combiner avec tous les types de bi-structure maillée extensible de l'invention dont notamment les structures à barres, à lames ou de type fibreuse.

Sur cette base, il est possible de réaliser un ensemble autonome tel qu'un chariot 60 représenté à la figure 26 comportant des roues 80 dont des roues avant 81 et des roues arrière 82. Des supports de roues 90 sont représentés permettant de fixer les roues 80 à la bi-structure. La cinématique fonctionne de façon analogue à celle d'une poussette et bénéficie du gain en efficacité du ratio de variation en longueur/variation en largeur de la bi-structure de l'invention.

Le chariot comporte en outre des bras 70 permettant de manipuler le chariot dont la bi-structure réalise le plateau inférieur.

La figure 26 représente latéralement une position de pliage et une position de dépliage du chariot 70.

Un premier manchon 71 sur la gauche, situé à l'avant du chariot, est fixe et correspond au point d'accroche avant de la bi-structure.

Le second manchon 72 est coulissant sur une partie intermédiaire et coulisse d'une distance d'environ 2 centimètres.

Le troisième manchon 73 est coulissant fixé à une distance donné d'un quatrième manchon 74 qui est coulissant et va coulisser d'environ 4 centimètres.

Une biellette 77 fixée d'une part au troisième manchon 73 et d'autre part au prolongement du bras arrière 70, en son extrémité 75, à une distance d'environ 4 centimètres du point de rotation 76.

Les deux bras arrière 70 comportent dans ce cas un dispositif de rigidification 80 qui peut être un double compas et qui assure un verrouillage en largeur du chariot.

Dans ce mode de réalisation, le plateau inférieur peut être intégré dans un modèle de chariot plus complet :
- disposant d'un deuxième plateau supérieur ;
- disposant d'une corbeille en partie haute ;
- disposant d'une potence porte-cabas.

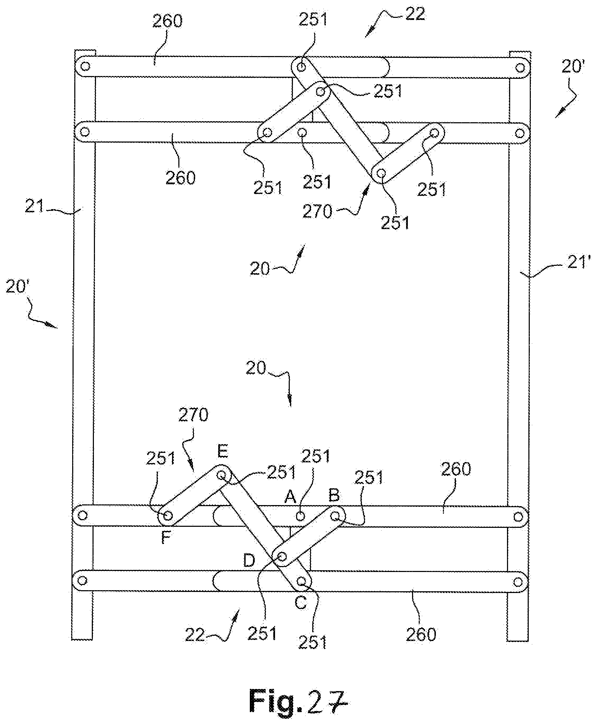

La figure 27 représente un mode de réalisation d'une structure de maintien 20, pouvant former une structure cadre, permettant d'assurer un maintien en largeur d'une bi-structure de l'invention. Une structure de cadre 20' est fixée à la structure de maintien 20 au niveau d'une zone à proximité comprenant les coins de la forme rectangulaire de la bi-structure. Selon une interprétation, la structure de cadre 20' peut être considérée comme faisant partie de la structure de maintien 20.

Dans ce mode de réalisation, la structure de maintien 20 comporte un ensemble de liaisons pivot 251 et un double compas 22 à l'avant de la structure et à l'arrière. Les compas doubles 260 utilisent un « bisecteur » 270 issu du « trisecteur » d'Alfred Kempe à base de deux antiparallélogrammes dont l'un ACEF est le double de l'autre ABCD.

Dans ce mode de réalisation, les relations suivantes des points pivots sont vérifiées :
- AB=CD=1 ;
- AB=AC=EF=2;
- CE=4.

Le rôle du « bisecteur » 270 est de maintenir la totale symétrie des angles de rotation des demi-compas gauches et droits, ce qui induit le strict respect de la structure rectangulaire de la bi-structure.

Ce mode de réalisation exige peu d'espace, ce qui autorise le renforcement au centre par une à deux barres coulissantes en diagonale et/ou des compas supplémentaires.

Il est également possible d'obtenir une solution approximative toujours à base d'antiparallélogrammes.

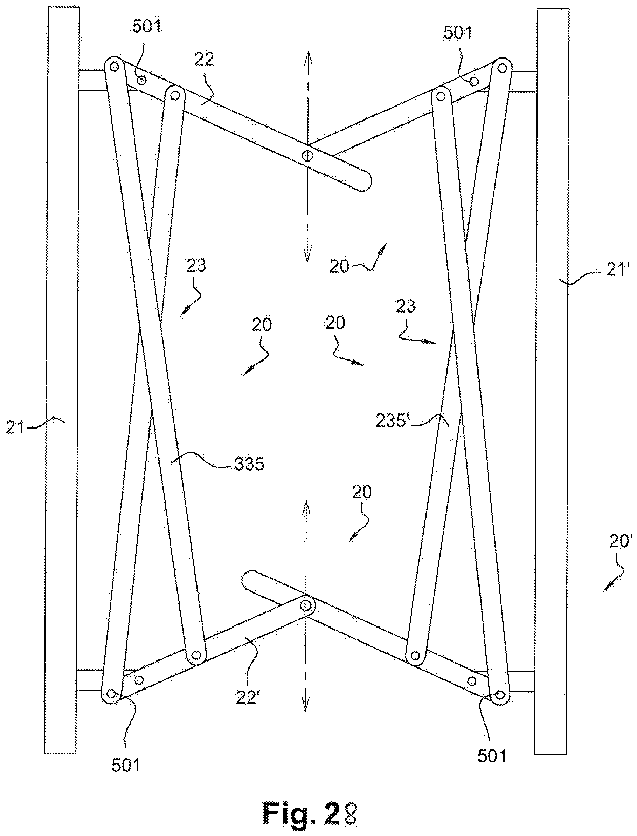

La figure 28 représente un autre mode de réalisation d'une structure de maintien 20 combiné avec une structure de cadre 20'.

Dans ce mode de réalisation, deux compas 22, 22' fonctionnent en opposition et sont synchronisés en rotation par les deux antiparallélogrammes 23, 23'. Les barres 21, 21' dont le parallélisme est à synchroniser sont liés par des points de rotations 501 milieux des petits côtés des antiparallélogrammes 23, 23'.

Dans la figure 28, il a été retenu une proportion de l'antiparallélogramme d'un rapport environ de 1 à 7 : cela permet d'avoir un écart d'1% entre les deux valeurs. L'hypoténuse d'un triangle rectangle de base 1 et de hauteur 1/7 a pour longueur la racine carrée de 1+1/49 = 1 + 2% égal à 1 + 1 % fois la base.

Selon un mode de réalisation la structure de maintien 20 peut comprendre des compas pliants intermédiaires non représentés dans un sens et/ou dans l'autre.

Cette solution permet d'ajouter un renfort selon un axe longitudinal selon le nombre de compas pliants ajoutés.

Un point de support central peut être également ajouté au moyen de une à deux barres coulissantes en diagonale.

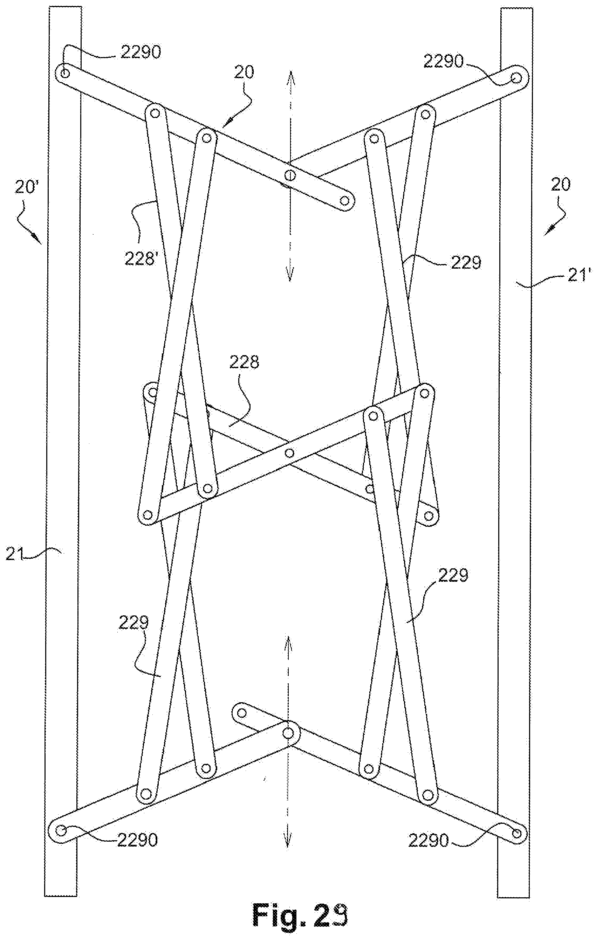

La figure 29 représente un autre mode de réalisation comprenant une structure de cadre 20' à laquelle est fixée un structure de maintien 20 par des liaisons pivots 2290. Ce mode de réalisation constitue une solution envisageable et compatible de la bi-structure. Elle comprend :
- une croix centrale dont les branches sont reliées par des antiparallélogrammes à l'échelle ½ des précédents ;

Cette solution permet :
- d'assurer au moyen de la croix un relais de la synchronisation de la rotation de la bi-structure;
- d'assurer la conservation d'un écartement de quelques centimètres entre les liaisons de pliages ;

Il est possible d'ajouter à la structure de maintien 20 : une à deux barres coulissantes en diagonale pour assurer l'appui du point central.

La figure 30 représente un autre mode de réalisation dans lequel la structure de maintien 20 est combinée à une structure maillée 10 comprenant des barres longitudinales 281 parallèles entre elles. Dans ce cas la structure de cadre 20' peut être confondue avec la structure de maintien 20, dans ce cas on considère que les barres longitudinales 21 et 21' sont des éléments de la structure de maintien 20. La bi-structure est représentée dans deux positions de pliage : dépliée et pliée.

Dans cette variante, la structure maillée 10 comprend une longueur L1' invariante dans toutes les positions de pliage et dépliage de la bi-structure.

L'espacement entre les barres longitudinales 281 sur la surface de la bi-structure est variable selon la position de pliage et dépliage.

Dans cet exemple de réalisation, les barres sont reliées à leurs deux extrémités à un dispositif en losanges 282 qui assure l'équidistance entre les barres longitudinales 281 le dispositif en losanges 282 comprend une pluralité de points d'accroche permettant de fixer le dispositif en losanges sur chacune des barres longitudinales. Chaque barre longitudinale 281 comprend en au moins une extrémité au moins un point de contact, cas des barres 284 positionnées à chaque extrémité des deux côtés de la bi-structure, ou au moins deux points de contacts 283 pour les autres barres longitudinales comprises entre les deux barres longitudinales extrêmes 284.

La figure 19 représente différents modes de réalisation d'interface assurant la fonction de point d'appui, également appelés points de support, entre la structure de maintien 20, pouvant être la structure cadre, et la structure maillée 10.

L'interface 91 représente un cylindre de la hauteur adéquate, selon la distance choisie séparant les plans comprenant d'une part la structure maillée 10 et d'autre part la structure de maintien 20, en prenant en considération l'épaisseur des éléments de liaison.

L'interface 91 est positionnée entre le point à renforcer et le point en appui. A titre d'exemple cela peut être le cas du point central qui vient en appui sur une des deux diagonales, en contact en continu pendant la phase de pliage/dépliage.

L'interface 92 comprend un cylindre tel que l'interface 91 et comporte une forme de mamelon dans sa partie inférieure autorisant un certain jeu de fonctionnement pendant la phase de pliage/dépliage mais venant à la bonne hauteur en phase finale de dépliement de la bi-structure.

L'interface 93 est proche de l'interface 92 et comprend une bille porteuse 930 de manutention l'extrémité du mamelon qui a été écrêté.

L'interface 93 permet d'accroitre la robustesse de la bi-structure une fois dépliée en particulier pour supporter des charges assez lourdes.

Une interface de type rampe sur un élément plus long peut également être une bonne alternative.

Ce type d'interfaces est à positionner sur l'élément de structure le plus pertinent : le point à renforcer, le point en appui, voire les deux. Par exemple, les points 35, 35' ,33, 221, 245, 246, 110, 120, 283 décrits précédemment sont des points particulièrement intéressants pour établir un contact entre la structure maillée et la structure de maintien par exemple au moyen d'une interface décrite à la figure 19.

De façon pratique, il s'avère sans que cela soit obligatoire que les points pivots sont privilégiés pour positionner ces interfaces. Mais de fait un autre positionnement à quelques centimètres près peut être également efficace en termes de renforcement.

Selon un mode de réalisation, il est possible de rendre la bi-structure contrôlable en ajoutant au moins un actionneur, à titre d'exemples un actionneur linéaire électrique, ou pneumatique, ou oléopneumatique.

Cet actionneur peut être positionné par exemple :
- entre deux extrémités de la bi-structure pour les bi-structures ayant une variation de longueur et de ce fait contrôlant la longueur ;
- entre les milieux de compas fonctionnant en opposition et de ce fait contrôlant la largeur ;
- entre le haut du compas double et le point fixe créé et de ce fait contrôlant la largeur ainsi que le verrouillage/déverrouillage.

Dans ce cadre, il est d'autant plus intéressant d'avoir synchronisé l'ensemble dispositifs et notamment des verrouillages/déverrouillages.

Selon un mode de réalisation, un ressort à gaz à blocage du type de ceux utilisés de réglage en hauteur des sièges de bureau, il est possible d'accéder à des positions intermédiaires correspondant à un réglage en largeur différent et/ou une position intermédiaire de pliage/dépliage de l'ensemble. Cela peut être le cas, par exemple pour une chaise longue.

Selon tous les modes de réalisations, La structure maillée peut être complétée sur sa face externe si besoin par un tissu, une toile potentiellement étanche ,un garnissage ou des lames articulées par exemple de type clayettes ou volet roulant.

Ces derniers peuvent être :
- non extensibles et être mises en tension
- extensibles
- ou encore s'enrouler et se dérouler avec une solution de type rideau enrouleur ou volet roulant.

Il également possible de doubler la bi-structure par symétrie obtenant ainsi une structure sandwich avec deux faces externes.

Il est également possible de combiner deux bi-structures orientées perpendiculairement et assurer une forme d'entrecroisement des éléments.

De fait, la solution proposée issue du domaine de la poussette peut être adoptée pour des objets pliables en largeur dans différents domaines autres que la puériculture :
La bi-structure de l'invention peut donc être adaptée à des civières dans le domaine médical.

En outre, la bi-structure peut être appliquée dans le domaine du mobilier pour des applications concernant des sièges, des strapontins, des chaises, des fauteuils, ou encore des chaises longues. Un avantage est le pliage de la bi-structure, ce qui permet des applications de mobiliers transportables notamment utiles pour des applications dans le domaine du mobilier de jardin ou de camping ou dans le domaine du matériel forain de marchand ambulant. A titre d'exemple, on cite un étal pliable en largeur combiné à un lit de camp forain.

Selon une application de la bi-structure de l'invention, un objet de l'invention concerne un chariot pliable, tel qu'un chariot de course pliable, un diable, un chariot de manutention pliable.

Dans le domaine de l'aéronautique, une application concerne les sièges de cabine extensible pliable en largeur par exemple réglable en largeur en fonction de la classe du passager. D'une façon plus générale, l'invention permet de concevoir des sièges d'appoints.

La bi-structure peut être utilisée pour former des parois de chariot ou encore des cloisons, des ridelles, ou des supports latéraux de brouette.

Enfin, une bi-structure de l'invention peut être appliquée pour former des tapis de sol ou des tables à pic-nic.

Avantageusement, la bi-structure peut former un support apte à être posé sur le sol. Selon un mode la bi-structure forme un support fixé par les coins de la forme rectangulaire. Selon un autre mode de réalisation, elle peut être posée entre deux barres transversales.

Selon un mode de réalisation, la bi-structure est fixée à l'intérieur d'un carter et qu'elle forme un support extractible de l'intérieur. Le support est plié dans un carter et utilisé déplié sur la partie sortant du carter.

Selon un mode de réalisation, la bi-structure forme le fond ou la paroi d'un contenant. Lorsqu'elle constitue un fond, elles

Selon un mode de réalisation, la bi-structure elle est combinée à un dispositif enrouleur d'un revêtement de la bi-structure. Il peut s'agir d'un support combiné à un dispositif de type rideau enrouleur ou volet roulant.

Selon un mode de réalisation, la bi-structure est utilisée comme structure portante et comporte un dispositif vertical comportant des bras.

Selon un mode de réalisation, le dispositif vertical comporte un dispositif de rigidification permettant une réduction de la largeur séparant les bras lors du pliage de la bi-structure.

## Revendications

1. Bi-structure maillée extensible (BISM₁, BISM₂, BISM₃, BISM₄) **caractérisée en ce qu'**elle comprend :
• une première structure maillée (SM₁), les mailles étant réparties selon un premier plan, la première structure maillée (SM₁) étant pliable selon une première direction (D₁) comprise dans le premier plan (P₁) ;
• une structure cadre (SC) comprenant aux moins deux éléments longitudinaux solidaires de la première structure maillée (SM₁) et agencés de part et d'autre des bords opposés de ladite première structure maillée (SM₁) et permettant de faire varier les dimensions de la bi-structure ;
• une seconde structure maillée (SM₂), les mailles étant réparties selon un second plan (P₂) parallèle au premier plan, la seconde structure maillée (SM₂) étant pliable par compression latérale selon la première direction (D₁) ;
• des moyens de liaisons (ML) entre la première structure maillée (SM₁) et la seconde structure maillée (SM₂) de manière à rendre les deux structures maillées solidaires l'une de l'autre, les moyens de liaisons permettant de synchroniser les pliages des deux structures maillées (SM₁, SM₂) dans la première direction (D₁),
la seconde structure maillée (SM₂) comprenant un nombre (N₂) de mailles strictement supérieur au nombre (N₁) de mailles de la première structure maillée (SM₁), le rapport (RP_{N}) entre le nombre de mailles (N₂) de la seconde structure maillée (S₂) et le nombre de mailles (N₁) de la première structure maillé (SM₁) étant sensiblement proche du rapport (RPL) entre la largeur d'une lame (L₁) de la première structure maillée (S₁) et la largeur d'une lame (L₂) de la seconde structure maillée (S₂).

2. Bi-structure maillée extensible selon la revendication 1, **caractérisée en ce que** les moyens de liaisons permettent de relier les première et seconde structures maillées (SM₁, SM₂) par un ensemble de points de points de synchronisation (200).

3. Bi-structure maillée extensible selon l'une quelconque des revendications 1 à 2, **caractérisée en ce que** le pliage de la bi-structure est réalisé dans un espace limité à la forme géométrique dépliée de la première structure maillée (SM₁).

4. Bi-structure maillée extensible (BISM₁) selon l'une quelconque des revendications 1 à 3, **caractérisée en ce que** les première et seconde structures maillées sont tissées de sorte que chaque maille de chacune des structures maillées est cousue avec ses mailles voisines.

5. Bi-structure maillée extensible (BISM₁) selon l'une quelconque des revendications 1 à 4, **caractérisée en ce que** :
▪les moyens de liaisons comprennent un ensemble de fibres fixées à chacune des première et seconde structures maillées (SM₁, SM₂), et ;
▪les fibres sont agencées selon une direction sensiblement perpendiculaire au premier plan (P₁).

6. Bi-structure maillée extensible (BISM₁) selon l'une quelconque des revendications 4 à 5, **caractérisée en ce que** :
▪la structure de cadre comprend des ouvertures pour le passage d'éléments de compression s'étendant entre les deux bords opposés de la structure de cadre, et ;
▪lesdits éléments de compression sont des fils parallèles entre eux qui permettent de rapprocher les deux bords opposés de la structure de cadre par une action de traction sur lesdits fils.

7. Bi-structure maillée extensible (BISM₂) selon l'une quelconque des revendications précédentes, **caractérisée en ce que** :
▪la première et/ou la seconde structures maillées (SM₁, SM₂, SM₃) comporte(nt) un ensemble de barres ou de lames (12) reliées entre elles par une pluralité de points d'assemblage (120) de sorte à former un ensemble de mailles, et ;
▪les points d'assemblage (120) forment une liaison pivot entre deux barres du maillage et/ou permettent d'établir un contact plan localement entre deux portions de barres ou de lames (12) entre elles.

8. Bi-structure maillée extensible (BISM₂) selon l'une quelconque des revendications 6 à 7, **caractérisée en ce que** la première et la seconde structure maillée extensible (SM1, SM2) sont reliées entre elles par un ensemble de points de synchronisation (200) permettant de synchroniser les pliages et dépliages de la bi-structure.

9. Bi-structure maillée extensible (BISM₂) selon la revendication 1, **caractérisée en ce que** le rapport (RP) entre le nombre de mailles (N₁) de la seconde structure maillée (SM₂) et le nombre de mailles de la première structure maillé (SM₁) est pair ou un multiple de 4.

10. Bi-structure maillée extensible (BISM₁, BISM₂) selon l'une quelconque des revendications 1 à 9, **caractérisée en ce que** :
▪la structure de cadre comprend aux moins deux éléments longitudinaux solidaires de la seconde structure maillée (SM₂) et agencés de part et d'autre des bords opposés de ladite seconde structure maillée (SM₂) et permettant de faire varier les dimensions de la bi-structure et/ou ;
▪ladite structure de cadre comporte au moins une barre de liaison formant un des éléments longitudinaux.

11. Bi-structure maillée extensible (BISM₁, BISM₂) selon la revendication 10, **caractérisée en ce qu'**au moins une barre de liaison (21) comporte au moins deux éléments de liaisons (30, 30') permettant d'assurer chacun au moins un point de support (33) avec la structure maillée (10), la barre de liaison (21) s'étendant selon la longueur (L) de la bi-structure.

12. Bi-structure maillée extensible (BISM₃) selon l'une quelconque des revendications 1 à 3, **caractérisée en ce que** :
• la première structure maillée (SM₁) est une structure maillée (S₁) comprenant une pluralité de lames fixées entre elles de sorte à former un ensemble de mailles ;
• la seconde structure maillée (SM₂) est une bi-structure selon l'une quelconque des revendications 4 à 6.

13. Bi-structure maillée extensible (BISM₄) selon l'une quelconque des revendications 1 à 3, **caractérisée en ce que** :
• la première structure maillée (SM₁) est une bi-structure selon l'une quelconque des revendications 7 à 11 ;
• la seconde structure maillée (SM₂) est une bi-structure selon l'une quelconque des revendications 4 à 6.

14. Bi-structure maillée extensible selon l'une quelconque des revendications 1 à 3, **caractérisée en ce que** sont superposées 3 couches dont :
• Une première couche formant une bi-structure selon l'une quelconque des revendications 4 à 6.
• Une couche intermédiaire (SM₀) formée d'une structure maillée (S₁) comprenant une pluralité de lames fixées entre elles de sorte à former un ensemble de mailles;
• Une seconde couche formant une bi-structure selon l'une quelconque des revendications 4 à 6.

15. Bi-structure maillée extensible (BISM1, BISM2, BISM3, BISM4) selon l'une des revendications précédentes, **caractérisée en ce qu'**une structure de maintien (20) permet au moins un verrouillage de la bi-structure dans la position de dépliage et assure un ensemble de points de support (33) à la bi-structure maillée extensible.

## Patentansprüche

1. Dehnbare, maschige Bistruktur (BISM₁, BISM₂, BISM₃, BISM₄), **dadurch gekennzeichnet, dass** sie umfasst:
• eine erste maschige Struktur (SM₁), wobei die Maschen gemäß einer ersten Ebene verteilt sind, wobei die erste maschige Struktur (SM₁) gemäß einer ersten Richtung (D₁) faltbar ist, die in der ersten Ebene (P₁) inbegriffen ist;
• eine Rahmenstruktur (SC), umfassend wenigstens zwei längliche Elemente, die fest mit der ersten maschigen Struktur (SM₁) verbunden und auf jeder Seite der gegenüberliegenden Ränder der genannten ersten maschigen Struktur (SM₁) angeordnet sind und die Variation der Abmessungen der Bistruktur zulassen;
• eine zweite maschige Struktur (SM₂), wobei die Maschen gemäß einer zweiten Ebene (P₂) parallel zur ersten Ebene verteilt sind, wobei die zweite maschige Struktur (SM₂) gemäß der ersten Richtung (D₁) per lateraler Kompression faltbar ist;
• Verbindungsmittel (ML) zwischen der ersten maschigen Struktur (SM₁) und der zweiten maschigen Struktur (SM₂) derart, dass die zwei maschigen Strukturen fest miteinander verbunden sind, wobei die Verbindungsmittel die Synchronisation der Faltungen der zwei maschigen Strukturen (SM₁, SM₂) in der ersten Richtung (D₁) erlauben,
wobei die zweite maschige Struktur (SM₂) eine Anzahl (N₂) von Maschen umfasst, deren Anzahl (N₁) an Maschen strikt höher ist als die erste maschige Struktur (SM₁), wobei das Verhältnis (RP_{N}) zwischen der Anzahl an Maschen (N₂) der zweiten maschigen Struktur (S₂) und der Anzahl von Maschen (N₁) der ersten maschigen Struktur (SM₁) deutlich nahe dem Verhältnis (RPL) zwischen der Breite einer Lamelle (L₁) der ersten maschigen Struktur (S₁) und der Breite einer Lamelle (L₂) der zweiten maschigen Struktur (S₂) ist.

2. Dehnbare maschige Bistruktur gemäß Anspruch 1, **dadurch gekennzeichnet, dass** die Verbindungsmittel die Verbindung der ersten und zweiten maschigen Strukturen (SM₁, SM₂) durch eine Punktgruppe von Synchronisationspunkten (200) erlauben.

3. Dehnbare maschige Bistruktur gemäß irgendeinem der Ansprüche 1 bis 2, **dadurch gekennzeichnet, dass** die Faltung der Bistruktur in einem Raum realisiert ist, der auf die ausgefaltete geometrische Form der ersten maschigen Struktur (SM₁) begrenzt ist.

4. Dehnbare maschige Bistruktur (BISM₁) gemäß irgendeinem der Ansprüche 1 bis 3, **dadurch gekennzeichnet, dass** die erste und zweite dehnbare maschige Struktur derart gewebt sind, dass jede Masche jeder der maschigen Strukturen mit ihren benachbarten Maschen vernäht ist.

5. Dehnbare maschige Bistruktur (BISM₁) gemäß irgendeinem der Ansprüche 1 bis 4, **dadurch gekennzeichnet, dass**:
• die Verbindungsmittel eine Gruppe aus jeder ersten und zweiten maschigen Strukturen (SM₁, SM₂) befestigten Fasern umfassen, und
• die Fasern gemäß einer deutlich zur ersten Ebene (P₁) lotrechten Ebene angeordnet sind.

6. Dehnbare maschige Bistruktur (BISM₁) gemäß irgendeinem der Ansprüche 4 bis 5, **dadurch gekennzeichnet, dass**
• die Rahmenstruktur Öffnungen für den Durchgang von Kompressionselementen umfasst, die sich zwischen den zwei gegenüberliegenden Rändern des Rahmens erstrecken; und
• die genannten Kompressionselemente untereinander parallele Fäden sind, die die Annäherung der zwei gegenüberliegenden Ränder der Rahmenstruktur durch eine Zugaktion auf den genannten Fäden erlauben.

7. Dehnbare maschige Struktur (BISM₂) gemäß irgendeinem der voranstehenden Ansprüche, **dadurch gekennzeichnet, dass**:
• die erste und / oder die zweite maschige Struktur (SM₁, SM₂, SM₃) eine Gruppe von Stangen oder Lamellen (12) umfasst / umfassen, die miteinander durch eine Vielzahl von Montagepunkten (120) derart verbunden sind, dass eine Maschengruppe gebildet wird, und
• die Montagepunkte (120) eine Drehpunktverbindung zwischen zwei Stangen der Vernetzung formen und / oder die Herstellung einer Kontaktebene zwischen zwei Stangen- oder Lamellenabschnitten (12) unter ihnen erlauben.

8. Dehnbare, maschige Bistruktur (BISM₂) gemäß irgendeinem der Ansprüche 6 bis 7, **dadurch gekennzeichnet, dass** die erste und die zweite dehnbare maschige Struktur (SM₁, SM₂,) miteinander durch eine Gruppe von Synchronisationspunkten (200) verbunden sind, die die Synchronisation der Faltungen und Entfaltungen der Bistruktur erlauben.

9. Dehnbare, maschige Bistruktur (BISM₂) gemäß Anspruch 1, **dadurch gekennzeichnet, dass** das Verhältnis (RP) zwischen der Anzahl von Maschen (N₁) der zweiten maschigen Struktur (SM₂) und der Anzahl von Maschen der ersten maschigen Struktur (SM₁) gleich oder ein Vielfaches von 4 ist.

10. Dehnbare, maschige Bistruktur (BISM₁, BISM₂) gemäß irgendeinem der Ansprüche 1 bis 9, **dadurch gekennzeichnet, dass**:
• die Rahmenstruktur wenigstens zwei längliche Elemente umfasst, die mit der zweiten maschigen Struktur (SM₂) fest verbunden und auf jeder Seite der gegenüberliegenden Ränder der genannten zweiten maschigen Struktur (SM₂) angeordnet sind und die Variation der Abmessungen der Bistruktur erlauben und/oder;
• die genannte Rahmenstruktur wenigstens eine Verbindungsstange umfasst, die eine der länglichen Elemente formt.

11. Dehnbare, maschige Bistruktur (BISM₁, BISM₂) gemäß Anspruch 10, **dadurch gekennzeichnet, dass** wenigstens eine Verbindungsstange (21) wenigstens zwei Verbindungselemente (30, 30') umfasst, die die Gewährleistung von jeweils wenigstens einem Stützpunkt (33) mit der maschigen Struktur (10) erlaubt, wobei sich die Verbindungsstange (21) gemäß der Länge (L) der Bistruktur erstreckt.

12. Dehnbare, maschige Bistruktur (BISM₃) gemäß irgendeinem der Ansprüche 1 bis 3, **dadurch gekennzeichnet, dass**:
• die erste maschige Struktur (SM₁) eine maschige Struktur (S₁) ist, umfassend eine Vielzahl von Lamellen, die untereinander derart befestigt sind, dass sie eine Maschengruppe bilden;
• die zweite maschige Struktur (SM₂) eine Bistruktur gemäß irgendeinem der Ansprüche 4 bis 6 ist.

13. Dehnbare, maschige Bistruktur (BISM₄) gemäß irgendeinem der Ansprüche 1 bis 3, **dadurch gekennzeichnet, dass**:
• die erste maschige Struktur (SM₁) eine Bistruktur gemäß irgendeinem der Ansprüche 7 bis 11 ist;
• die zweite maschige Struktur (SM₂) eine Bistruktur gemäß irgendeinem der Ansprüche 4 bis 6 ist.

14. Dehnbare, maschige Bistruktur gemäß irgendeinem der Ansprüche 1 bis 3, **dadurch gekennzeichnet, dass** 3 Schichten übereinander gelagert sind, davon:
• eine erste Schicht, die eine Bistruktur gemäß irgendeinem der Ansprüche 4 bis 6 bildet;
• eine Zwischenschicht (SM₀), die aus einer maschigen Struktur (S₁) geformt ist, umfassend eine Vielzahl von Lamellen, die derart untereinander befestigt sind, dass sie eine Maschengruppe formen;
• eine zweite Schicht, die eine Bistruktur gemäß irgendeinem der Ansprüche 4 bis 6 formt.

15. Dehnbare, maschige Bistruktur (BISM₁, BISM₂, BISM₃, BISM₄) gemäß einem der voranstehenden Ansprüche, **dadurch gekennzeichnet, dass** eine Haltestruktur (20) wenigstens eine Verriegelung der Bistruktur in der Entfaltungsposition erlaubt und eine Gruppe von Trägerpunkten (33) an der dehnbaren, maschigen Bistruktur gewährleistet.

## Claims

1. An extensible mesh bistructure (BISM₁, BISM₂, BISM₃, BISM₄) **characterised in that** it comprises:
• a first mesh structure (SM₁), the meshes being distributed along a first plane, the first mesh structure (SM₁) being foldable along a first direction (D₁) included in the first plane (P₁);
• a frame structure (SC) comprising at least two longitudinal elements integral with the first mesh structure (SM₁) and arranged on either side of the opposite edges of said first mesh structure (SM₁) and enabling the dimensions of the bistructure to be varied;
• a second mesh structure (SM₂), the meshes being distributed along a second plane (P₂) parallel to the first plane, the second mesh structure (SM₂) being foldable by side compression along the first direction (D₁);
• connecting means (ML) between the first mesh structure (SM₁) and the second mesh structure (SM₂) so as to make both mesh structures integral with each other, the connecting means enabling the foldings of both mesh structures (SM₁, SM₂) to be synchronised in the first direction (D₁),
the second mesh structure (SM₂) comprising a number (N₂) of meshes strictly higher than the number (N₁) of meshes of the first mesh structure (SM₁), the ratio (RP_{N}) between the number of meshes (N₂) of the second mesh structure (S₂) and the number of meshes (N₁) of the first mesh structure (SM₁) being substantially close to the ratio (RPL) between the width of a blade (L₁) of the first mesh structure (S₁) and the width of a blade (L₂) of the second mesh structure (S₂).

2. The extensible mesh bistructure according to claim 1, **characterised in that** the connecting means enable the first and second mesh structures (SM₁, SM₂) to be connected by a set of synchronisation points (200).

3. The extensible mesh bistructure according to any of claims 1 and 2, **characterised in that** the folding of the bistructure is made in a space limited to the unfolded geometrical shape of the first mesh structure (SM₁).

4. The extensible mesh bistructure (BISM₁) according to any of claims 1 to 3, **characterised in that** the first and second mesh structures are woven such that each mesh of each of the mesh structures is sewn with its neighbour meshes.

5. The extensible mesh bistructure (BISM₁) according to any of claims 1 to 4, **characterised in that**:
- the connecting means comprise a set of fibres attached to each of the first and second mesh structures (SM₁, SM₂), and
- the fibres are arranged along a direction substantially perpendicular to the first plane (P₁).

6. The extensible mesh bistructure (BISM₁) according to any of claims 4 and 5, **characterised in that**:
▪ the frame structure comprises apertures for passing compression elements extending between both opposite edges of the frame structure, and
▪ said compression elements are wires parallel to each other which enable both opposite edges of the frame structure to be moved closer to each other by a tensile action on said wires.

7. The extensible mesh bistructure (BISM₂) according to any of preceding claims, **characterised in that**:
▪ the first and/or second mesh structures (SM₁, SM₂, SM₃) include(s) a set of bars or blades (12) connected to each other by a plurality of assembling points (120) so as to form a set of meshes, and
▪ the assembling points (120) form a pivot connection between two bars of the meshing and/or enable a planar contact to be established locally between two portions of bars or blades (12) between them.

8. The extensible mesh bistructure (BISM₂) according to any of claims 6 and 7, **characterised in that** the first and the second extensible mesh structure (SM₁, SM₂) are connected to each other by a set of synchronisation points (200) enabling the foldings and unfoldings of the bistructure to be synchronised.

9. The extensible mesh bistructure (BISM₂) according to claim 1, **characterised in that** the ratio (RP) between the number of meshes (N₁) of the second mesh structure (SM₂) and the number of meshes of the first mesh structure (SM₁) is even or a multiple of 4.

10. The extensible mesh bistructure (BISM₁, BISM₂) according to any of claims 1 to 9, **characterised in that**:
▪ the frame structure comprises at least two longitudinal elements integral with the second mesh structure (SM₂) and arranged on either side of the opposite edges of said second mesh structure (SM₂) and enabling the dimensions of the bistructure to be varied and/or
▪ said frame structure includes at least one connection bar forming one of the longitudinal elements.

11. The extensible mesh bistructure (BISM₁, BISM₂) according to claim 10, **characterised in that** at least one connecting bar (21) includes at least two connecting elements (30, 30') each enabling at least one support point (33) to be ensured with the mesh structure (10), the connecting bar (21) extending along the length (L) of the bistructure.

12. The extensible mesh bistructure (BISM₃) according to any of claims 1 to 3, **characterised in that**:
▪ the first mesh structure (SM₁) is a mesh structure (S₁) comprising a plurality of blades attached to each other so as to form a set of meshes;
▪ the second mesh structure (SM₂) is a bistructure according to any of claims 4 to 6.

13. The extensible mesh bistructure (BISM₄) according to any of claims 1 to 3, **characterised in that**:
▪ the first mesh structure (SM₁) is a bistructure according to any of claims 7 to 11;
▪ the second mesh structure (SM₂) is a bistructure according to any of claims 4 to 6.

14. The extensible mesh bistructure according to any of claims 1 to 3, **characterised in that** 3 layers are superimposed, including:
• a first layer forming a bistructure according to any of claims 4 to 6;
• an intermediate layer (SM₀) formed by a mesh structure (S₁) comprising a plurality of blades attached to each other so as to form set of meshes;
• a second layer forming a bistructure according to any of claims 4 to 6.

15. The extensible mesh bistructure (BISM₁, BISM₂, BISM₃, BISM₄) according to one of the preceding claims, **characterised in that** a holding structure (20) enables the bistructure to be at least locked in the unfolding position and ensures a set of support points (33) to the extensible mesh bistructure.
